# EUROPEAN PATENT APPLICATION

(11) **EP 4 303 330 A1**
(43) Date of publication of application: **10.01.2024**
(21) Application number: 22382653.8
(22) Date of filing: 08.07.2022
(51) Int. Cl.: C22B 3/08, C22B 7/00, C22B 30/06

(54) **A METHOD FOR THE SELECTIVE RECOVERY OF BISMUTH FROM SOLID IMPURITY STREAMS GENERATED DURING THE PRIMARY PRODUCTION OF COPPER**

(71) Applicant: Consejo Superior de Investigaciones Cientificas, 28006 Madrid (ES); Universitat Politècnica De Catalunya, 08034 Barcelona (ES)
(72) Inventor: CÓRDOBA SOLA, Patricia, 08034 Barcelona (ES); CORTINA PALLAS, Jose Luis, 08034 Barcelona (ES); LÓPEZ RODRÍGUEZ, Julio, 08034 Barcelona (ES); VALDERRAMA ANGEL, Cesar Alberto, 08034 Barcelona (ES)
(74) Representative: Ungria López, Javier

(57) **Abstract**

The present invention relates to a method for recovering bismuth (Bi) from a solid impurity stream generated during the pyrometallurgical production of copper, wherein the method comprises the steps of leaching the solid impurity stream in an acid medium at a pH under 0.5 to obtain a Bi-rich leachate; and titrating the Bi-rich leachate at a pH between 1.0 and 3.5 by using a strong base to obtain a precipitate of bismoclite (BiOCI). In a related aspect, the invention also relates to a method for the recovery of valuable materials and for the safe disposal of toxic contaminants from a solid impurity stream generated during the pyrometallurgical production of copper.

## Description

### FIELD OF THE INVENTION

The present invention relates to the field of the pyrometallurgy and hydrometallurgy industries. In particular, the present invention relates to a method for the selective recovery and revalorisation of added-value bismuth (Bi) impurities from dust contained in the exhaust flue gas from a copper matte converter, which is collected in an electrostatic precipitator (ESP) during the primary production of copper.

### BACKGROUND OF THE INVENTION

In recent years, high purity copper (Cu) deposits have become less common and most of the existing mines are nearing their end-of-exploitation. As a result, the Cu industry sector has been in the need of exploiting low quality Cu deposits with high impurity levels. Some of these contaminants such as arsenic are toxic and must be eliminated. On the other hand, high contents of contaminants such as bismuth (Bi) and antimony (Sb) can become an added value by-product. The industrial process for the treatment of Cu ore concentrates and their transformation into anodes and cathodes with the focus on obtaining a high quality Cu (99.9%) is a pyrometallurgical-based route that involves about 15 subsystems and procedures for internal recycling, for waste treatment, and for the recovery of valuable products.

The initial steps of the pyrometallurgical process entail the reception and storage of the Cu concentrate (20-40% Cu). Owing to its relatively high moisture content (-8%), the Cu concentrate follows a drying process (moisture reduction to ~2%) before the concentrate moves on to the mixing stage. In order to achieve a balanced mix for treatment in the flash smelting furnace (FSF), different qualities of the Cu concentrate are mixed with a flux of silica in the silos in order to facilitate reaction. In the FSF, the Cu concentrate follows a smelting process wherein the chemical elements of the concentrate undergo dissociation and oxidation, releasing a great deal of heat during the process. The molten materials fall into the settler, where the denser components, the slag (1.5% Cu), settles out in the bottom, leaving the lighter components, the matte, on top. The slag flows straight from the FSF into an electric furnace, where its Cu content is recovered, while the FSF gases, mostly sulphur dioxide (SO₂) (25- 30%), are used to obtain a high-pressure steam (-20 to 25% of the complex's total power), thereby reducing the total amount of power needed from off-site generator facilities.

The matte (65% Cu), on the other hand, moves on to the conversion process wherein Cu is separated from the left-over Sulphur (S), Iron (Fe) and other metals that were not eliminated in the smelting phase. The conversion process is a strongly exothermal process, so that secondary materials such as recycled Cu can be added during conversion without the need for extra fuel to create more heat. Conversion yields a product called blister Cu, which has a Cu content of approximately 99.5%. To produce a Cu with a purity degree even greater than 99.7%, the Cu anodes must be subjected to an electrolytic refining process in which the Cu is electrochemically dissolved from the anodes and deposited on the cathodes by means of a liquid solution called "electrolyte" (CuSO₄ and H₂SO₄) giving cathodes of 99.99% Cu purity. In addition to Cu, the less noble metals (e.g., Fe, Ni, Co, Zn, Pb, Sb, Bi, As) also dissolve at the anode, while the more noble metals (e.g., Ag, Au, Se, Te) settle at the bottom of the cell as an anode slime.

In the process of the primary production of copper (Cu), flue dusts are generated both at the FSF during the initial smelting process of Cu and also during the later conversion of the matte. Molten Cu can effectively carry added-value raw materials such as Bi or harmful elements such as As as impurities. Several of these impurities (e.g., Bi), can partially evaporate into the exhaust flue gas during these processes and later condense on the finest particles. As part of the depuration system, the exhaust flue gas from the Cu matte converter, which can have a high particle load, is de-dusted in hot electrostatic precipitators (ESP) before being pumped towards gas cooling and scrubbing processes. The resulting by-product that is thus generated is the ESP converter dust, which is highly enriched in Bi among other elements, such as Cu, Zn, As, and Pb.

Bismuth (Bi) is a component mainly used in fusible alloys (low-melting alloys), pharmaceutical compositions and chemical products. Currently, the end-of- life recycling input rate of Bi is between 1% and 2%. Bi is a critical raw material for the European Union (EU) because there are risks of supply shortages, and their impact on the economy is higher than that of most of the other raw materials. EU import reliance on refined Bi is of almost 100%, approx. 2900 tones, due to the predominant part of China in the EU supply, which represents 84% of the total EU imports of Bi. Raw materials such as Bi are essential to securing a transition to green energy technologies, to securing growth and sustainable consumption and to securing access to clean and efficient consumer technologies. Europe is highly dependent on importing raw materials to secure the global competitiveness of its manufacturing industries and to accelerate the transition to a resource efficient, sustainable society. To meet demand, it is crucial that attention shifts to secondary sources such as the effluents, residues and by-products generated in other industries. For example, CN110983062 (A) discloses the selective recovery of Bi in a copper recovery method which uses, as raw material, Cu- and Bi-rich materials obtained as part of the slag of a silver separating furnace. This is a comprehensive recovery method for preferentially extracting Cu where, apart from Bi which was recovered as a secondary by-product, no occurrence of other impurities was documented. Similarly, recoverable by-products are also generated during the pyrometallurgical based route of Cu production.

During the past years, the treatment of flue dusts, particularly those generated during the smelting stage of Cu, referred to as Cu smelter dusts or flash smelting furnace (FSF) dusts, has been extensively studied by many researchers and Cu processors, with the aim to capture their valuable components and for the safe and effective removal of undesirable components. Particularly, most of the research has been focused on the extraction of Cu and Zn by hydrometallurgical methods, the resulting leachates being sent back to the smelting system. The recovery of Pb, Sb, and Bi from Cu flue dusts has also been proposed by combined hydrometallurgical and pyrometallurgical processes. In some procedures, flue dusts are first leached with water or dilute sulfuric acid (H₂SO₄), the resulting leachates being sent to pyrometallurgical deoxidizing processes in order to separately produce crude Pb-Bi alloy. This technique was proved to be effective in the treatment of low-As smelter dusts where the valuable metals were preliminarily recovered. However, it led to increased energy consumption for these valuable metals' recovery. In an alternative, JP2014029033A proposes the recovery of Bi from the dust carried by the exhaust gas of a flash smelting furnace (FSF) used during Cu smelting. In this document, the authors describe a method to treat the dusts carried by the exhaust gas of a self-melting furnace, wherein Bi-containing Cu smelting dusts are pulped and leached with water and dilute acid and wherein Bi is selectively recovered from the solution using a resin comprising a crown ether compound with selective adsorptivity for Bi. This method does not disclose the treatment and/or purification of other impurities such as e.g., As, Cu, Cd. Finally, Morales et al. (Hydrometallurgy 105 (2010) 148-154) teach a hydrometallurgical process for the recovery of Cu and Zn and stabilisation of As from Cu smelter flue dusts. In their experimental setup, dusts were leached with water and different acid solutions followed by hydrocyclone classification to obtain residues. The Cu-rich coarse faction was sent back to a smelter and the As-rich fine faction was mixed with As stabilization agents for disposal in landfill.

In contrast to the recovery of valuable components from the flue dusts generated in the Flash Smelting Furnace (FSF), fewer treatment methods have been described for the recovery of valuable components (such as Bi) and/or the removal of any undesirable components from the flue dusts generated during the conversion of the copper matte. Hydrometallurgical processes based on acidic leaching (Tae Kyung Ha, et al., Separation and Purification Technology 142 (2015) 116-122) to recover Bi as Bi₂O₃ from the converter dust have been developed where substantial number of impurities such as Pb, Ag, Te and Cu were removed from the leach solution using SO₂ as reducing agent, but no treatment for the residue leachates and/or a safe disposal route for As was described. The recovery of As from Cu converter flue dusts was proposed by Tang M-T et al. (2009, "CR process for preparation of copper arsenate from copper converter flue dust", Nonferrous Smelting of China 6, 55-59) by a leaching and distillation process where As in the leaching liquor, was recovered as As acid and later converted into copper arseniate (Cu₃(AsO₄)). Generally, these hydrometallurgical processes involve an acid leaching of dusts to solubilise metal components followed by a sequential precipitation of various components, where secondary precipitated materials are recycled back to the smelter when/if this is a viable option. In certain cases, it is desirable that secondary materials are precipitated as inert, environmentally friendly species that can be disposed of in a safe manner. Even though most of these processes have proven to be effective in one attempt or another, all are conditional on improvement, particularly with respect to increased capture of added-value end products and the reduction of materials ultimately discharged to the environment. Accordingly, there is a need in the field to provide alternative methods that allow more efficient recovery of valuable impurity materials and/or more efficient disposal of toxic elements in the form of inert, environmentally friendly chemical species.

### SUMMARY OF THE INVENTION

In the process of the primary production of copper, the exhaust flue gas generated during the copper matte conversion carries certain amounts of dust that can be recovered in electrostatic precipitators (ESP) before the flue gas is pumped towards gas cooling and scrubbing processes. During copper matte conversion, bismuth partially evaporates into the exhaust flue gas and it later condensates on the finest particles when the flue gas cools down. As a result, the ESP converter dust is highly enriched in Bi, among other elements such as Cu, Zn, As and Pb. In this context, the inventors have found an efficient method for the selective recovery of bismuth as a high value by-product from solid impurity streams.

Thus, in a first aspect the invention relates to a method for recovering bismuth (Bi) from a solid impurity stream generated during the pyrometallurgical production of copper, wherein the method comprises the steps of:
a) Leaching the solid impurity stream in an acid medium at a pH under 0.5 to obtain a Bi-rich leachate;
b) Titrating the Bi-rich leachate at a pH between 1.0 and 3.5 by using a strong base to obtain a precipitate of bismoclite (BiOCI).

In a further aspect, the invention relates to a method for the recovery of valuable materials and for the safe disposal of toxic contaminants from a solid impurity stream generated during the pyrometallurgical production of copper, wherein the method comprises the steps of:
a) Leaching the solid impurity stream in a first acid medium at a pH between 1 and 4 to obtain a first Cu-rich leachate and a first Bi-rich solid, wherein the first acid medium is H₂SO₄;
b) Optionally, washing the first Bi-rich solid obtained in step (a) in water, preferably MilliQ water, to obtain a second Cu-rich leachate and a second Bi-rich solid;
c) Leaching the first Bi-rich solid obtained in step (a) or the second Bi-rich solid obtained in step (b) in a second acid medium at a pH under 0.5 to obtain a Bi-rich leachate and a Pb-rich solid, wherein the second acid medium is HCI or a combination of HCI and H₂SO₄;
d) Titrating the Bi-rich leachate at a pH between 1.0 and 3.5 by using a strong base to obtain a precipitate of bismoclite (BiOCI) and an As-rich liquid;
e) Optionally, washing the precipitate of bismoclite (BiOCI) obtained in step (d) in water, preferably MilliQ water;
f) Optionally, calcinating the precipitate of BiOCI obtained in step (e) or the washed precipitate of BiOCI obtained in step (f) at a temperature between 300-400°C;
g) Contacting the As-rich liquid with iron sulphate (Fe₂(SO₄)₃) to precipitate scorodite (FeAsO₄^{.}2H₂O).

### BRIEF DESCRIPTION OF THE FIGURES

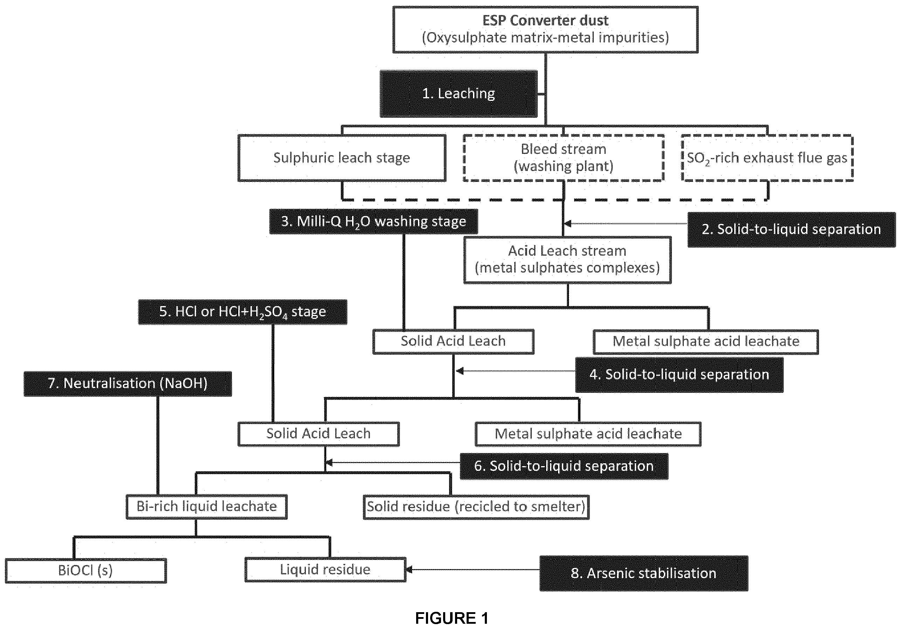

- Figure 1 shows an exemplary plant scheme according to one or more embodiments of the invention. (1) Leaching step with diluted H₂SO₄. (2) Solid-liquid separation after the leaching stage with diluted H₂SO₄. (3) Washing step with Milli-Q water for solids separated after the leaching step with diluted H₂SO₄. (4) Solid-liquid separation after washing. (5) Leaching step with concentrated HCI, or concentrated HCI and H₂SO₄. (6) Solid-liquid separation after the leaching step with concentrated HCI. (7) Neutralisation step using a selective recovery agent (i.e., NaOH). (8) Stabilisation step of environmentally inert As species for safe disposal.

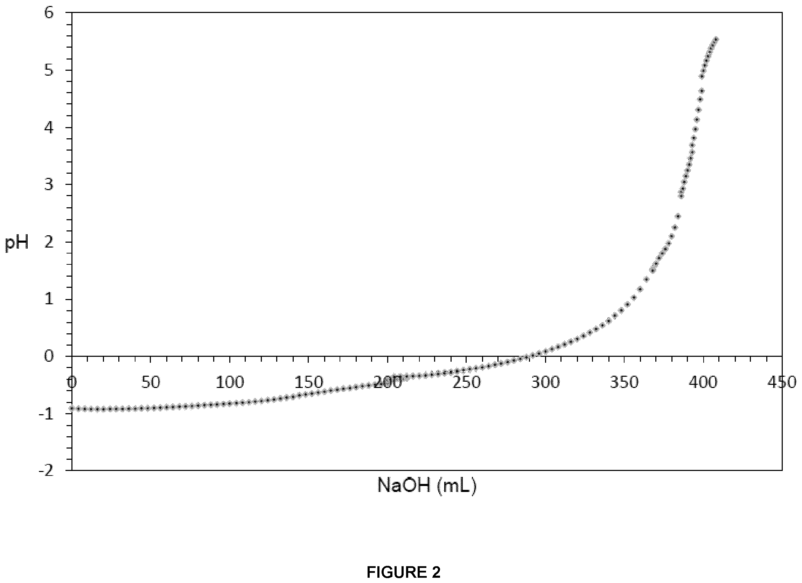

- Figure 2 shows the variation in pH values versus volume of NaOH added during Bi recovery.

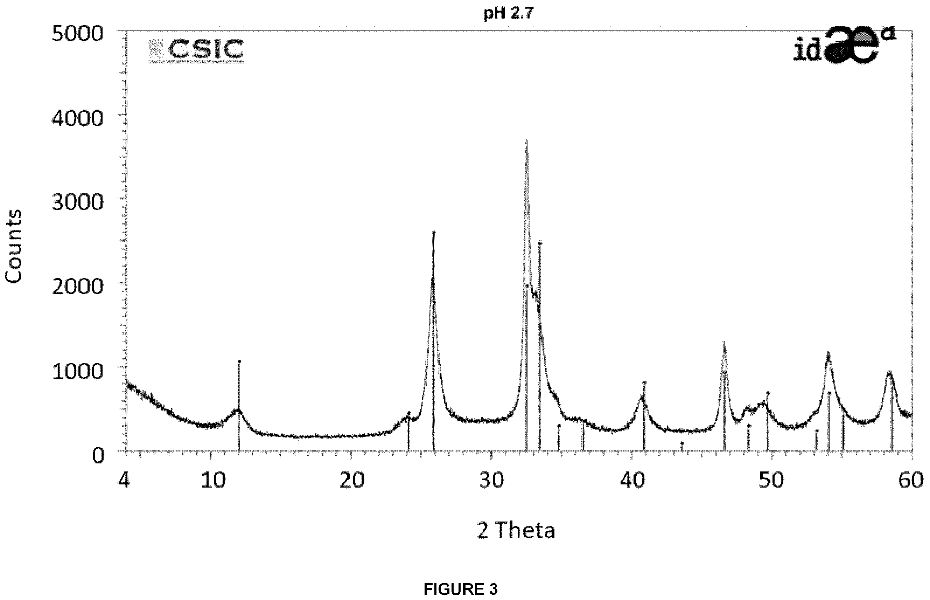

- Figure 3 shows the X-ray diffraction pattern of the Bi end-product recovered after precipitation with NaOH at pH 2.7. Pre-treatment: first acid leach with 5% sulphuric acid; main treatment: acid leach with 16% hydrochloric acid. Superimposed model pattern corresponds to Bismoclite, syn - BiOCI.

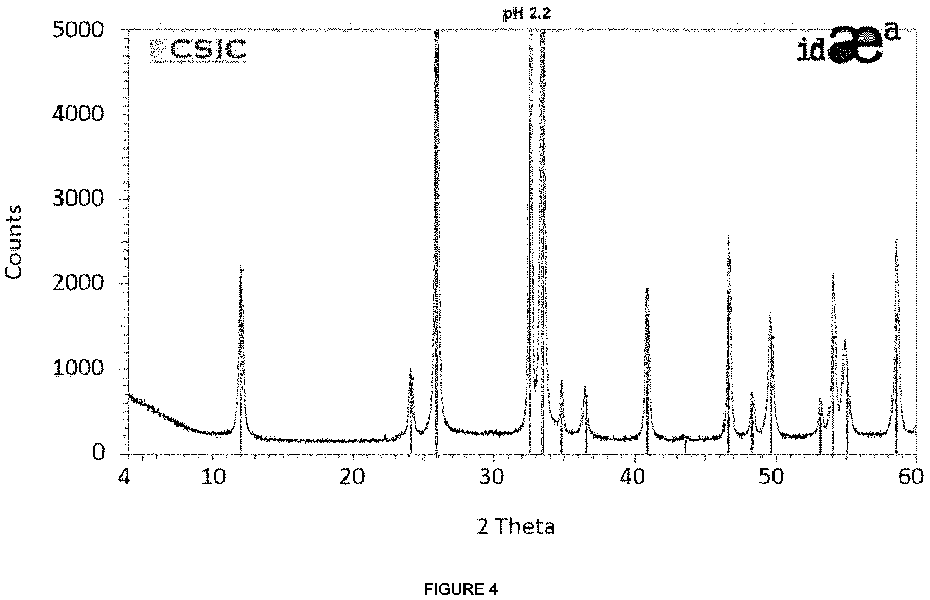

- Figure 4 shows the X-ray diffraction pattern of the Bi end-product recovered after precipitation with NaOH at pH 2.2. Pre-treatment: first acid leach with 5% sulphuric acid; main treatment: acid leach with a blend of 5% sulphuric acid and 16% hydrochloric acid. Superimposed model pattern corresponds to Bismoclite, syn - BiOCI.

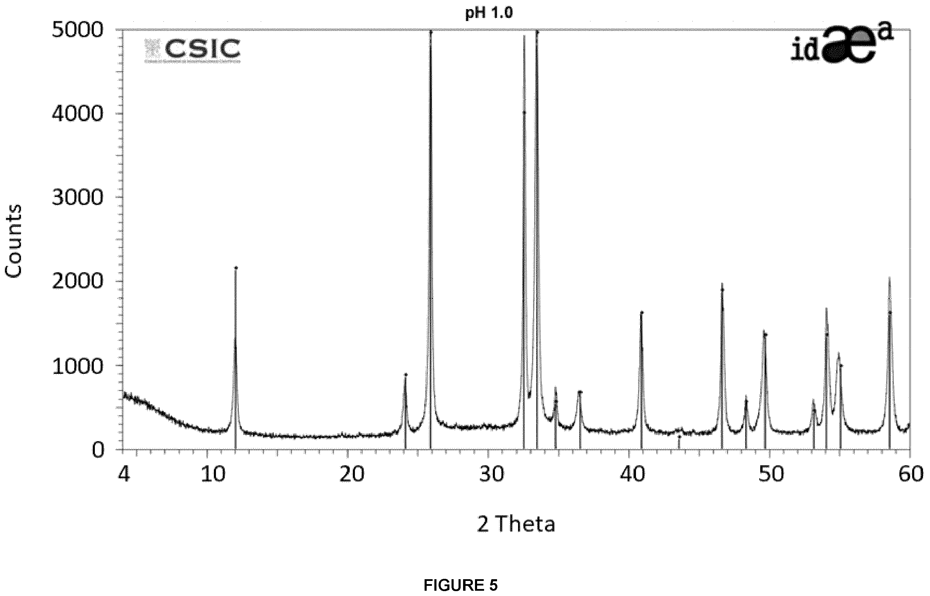

- Figure 5 shows the X-ray diffraction pattern of the Bi end-product recovered after precipitation with NaOH at pH 1.0. Pre-treatment: first acid leach with 50% sulphuric acid; main treatment: acid leach with 16% hydrochloric acid. Superimposed model pattern corresponds to Bismoclite, syn - BiOCI.

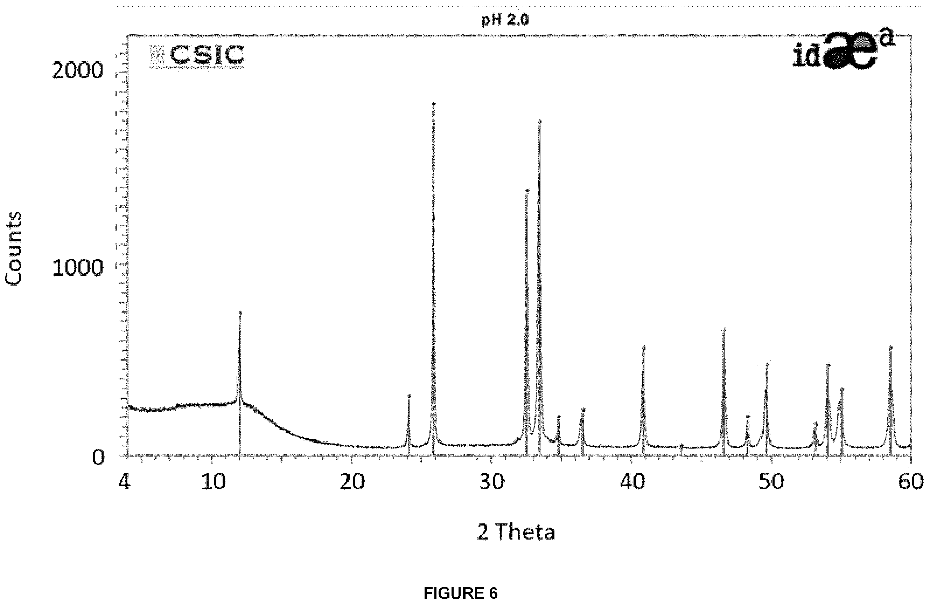

- Figure 6 shows the X-ray diffraction pattern of the Bi end-product recovered after precipitation with NaOH at pH 2.0. Pre-treatment: first acid leach with 50% sulphuric acid; main treatment: acid leach with a blend of 5% sulphuric acid and 16% hydrochloric acid. Superimposed model pattern corresponds to Bismoclite, syn - BiOCI.

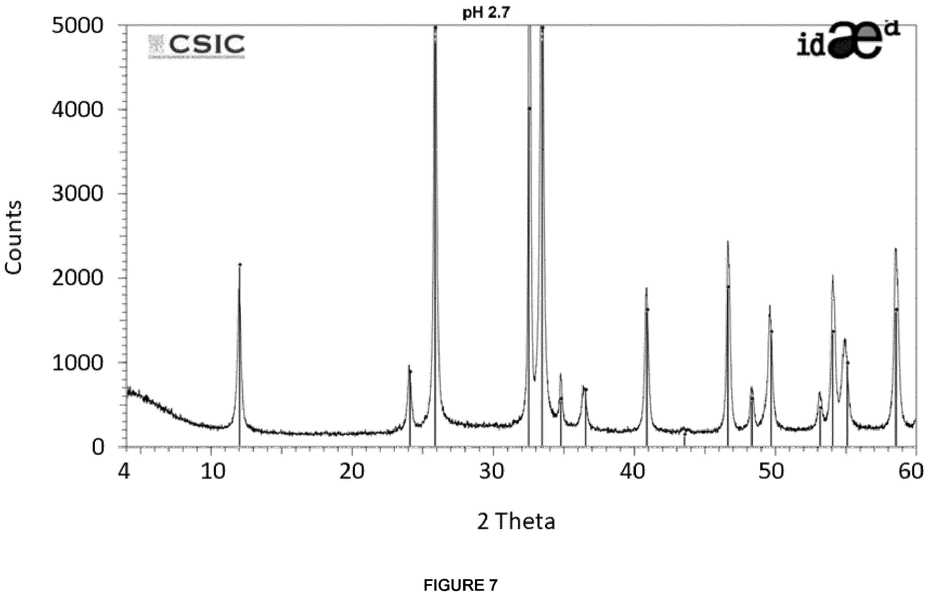

- Figure 7 shows the X-ray diffraction pattern of the Bi end-product recovered after precipitation with NaOH at pH 2.7. Pre-treatment: first acid leach with 50% sulphuric acid; main treatment: acid leach with a blend of 50% sulphuric acid and 16% hydrochloric acid. Superimposed model pattern corresponds to Bismoclite, syn - BiOCI.

### DETAILED DESCRIPTION OF THE INVENTION

As explained above, in the process of the primary production of copper, the exhaust flue gas generated during the copper matte conversion carries certain amounts of dust that can be recovered in electrostatic precipitators (ESP) before the flue gas is pumped towards gas cooling and scrubbing processes. During copper matte conversion, bismuth partially evaporates into the exhaust flue gas and it later condensates on the finest particles when the flue gas cools down. As a result, the ESP converter dust is highly enriched in Bi, among other elements such as Cu, Zn, As and Pb. In this context, the inventors have found an efficient method for the selective recovery of bismuth as a high value by-product from solid impurity streams.

Thus, in a first aspect the invention relates to a method for recovering bismuth (Bi) from a solid impurity stream generated during the pyrometallurgical production of copper, wherein the method comprises the steps of:
a) Leaching the solid impurity stream in an acid medium at a pH under 0.5 to obtain a Bi-rich leachate;
b) Titrating the Bi-rich leachate at a pH between 1.0 and 3.5 by using a strong base to obtain a precipitate of bismoclite (BiOCI).

In a particular embodiment, the solid impurity stream is dust from a copper matte converter source. Copper matte conversion is the process by which the copper is separated from the left-over sulphur, iron and other metals not eliminated in an earlier smelting stage during the pyrometallurgical production of copper. Conversion is a strong exothermal process, so secondary materials, such as recycled copper, can be added during conversion without the need for extra fuel in order to generate more heat. Like in flash smelting, it is common practice to enrich the air used in the process with oxygen. Conversion yields a product called blister copper, which has a copper content of approximately 99%. The process of copper matte conversion in a converter produces particle-carrying gases that need to be dusted off in hot electrostatic precipitators (ESP) before said gases are sent along to the gas cooling and scrubbing section. The gas resulting from copper matte conversion typically carries 5-10% SO₂. The process of dusting off the particle-carrying gases in hot electrostatic precipitators (ESP) results in a solid impurity stream that is referred to as dust from the copper matte converter source. Thus, in a particular embodiment the dust from a copper converter source is dust collected in an electrostatic precipitator (ESP). In other words, the solid impurity stream is dust contained in the exhaust flue gas from a copper matte converter, which is collected in an electrostatic precipitator (ESP) during the primary production of copper.

In a preferred embodiment, the ESP converter dust (that is, the particles contained in the flue gas from the converter and which are collected in the ESP) comprises, as major elements (that is, elements at a concentration ≥1%), Cu, Zn, S, Pb, As, and Bi. Major element Cu is present at a concentration of 20-24%. Major element Cu is present at a concentration of 20%, 21%, 22%, 23% or 24%, preferably 21%. Major element S is present at a concentration of 10-14%. Major element S is present at a concentration of 10%, 11%, 12%, 13% or 14%, preferably 12%. Major element Zn is present at a concentration of 10-14%. Major element Zn is present at a concentration of 10%, 11%, 12%, 13% or 14%, preferably 12%. Major element Pb is present at a concentration of 6.0-8.0%. Major element Pb is present at a concentration of 6.0%, 6.5%, 6.7%, 6.9%, 7.0%, 7.5% or 8.0%, preferably 6.9%. Major element As is present at a concentration of 3.0-5.0%. Major element As is present at a concentration of 3.0%, 3.5%, 3.7%, 3.8%, 3.9, 4.0, 4.5 or 5.0%, preferably 3.8%. Major element Bi is present at a concentration of 1.0-2.0%. Major element Bi is present at a concentration of 1.0%, 1.1%, 1.2%, 1.3%, 1.4%, 1.5%, 1.6%, 1.7%, 1.8%, 1.9% or 2.0%, preferably 1.5%. The ESP converter dust sample is highly enriched in Bi (11378-13004 mg/kg) which make this by-product a source with a potential perspective for Bi recovery. Additionally, the ESP dust may comprise Mo and Tl at concentrations that can reach over 300 ppm in some samples. Further, the ESP dust may also comprise Cd at variable concentrations, exceeding 100 ppm in certain ESP converter dust samples. In contrast, the flash smelting furnace (FSF) dust comprises, predominantly, Cu (21%), Fe (14%), S (12%), As (2.3%), Zn (2.0%) and Pb (1.8%). The concentration of Bi (which can be about 6900 mg/kg) in the flash smelting furnace (FSF) dust is approximately half of that in the ESP converter dust. The differences can be illustrated in table I which shows typical percentage values of the major elements present in FSF dust and in ESP converter dust.

**Table I. Differences in typical percentage values of major elements present in FSF dust versus major elements present in ESP converter dust.**

| Major element | ESP converter dust | FSF dust |
|---|---|---|
| Cu | 21% | 21% |
| S | 12% | 12% |
| Zn | 12% | 2.0% |
| Pb | 6.9% | 1.8% |
| As | 3.8% | 2.3% |
| Bi | 1.5% (approx. 13000mg/kg) | 0.7% (approx. 6900mg/kg) |
| Fe | 1.0% | 14% |

In terms of the species that can be found in the solid impurity streams, XRD reveals that the ESP converter dust (that is, the particles contained in the flue gas from the converter, and which are collected in the ESP) comprises a metallic oxysulphate matrix, wherein:
- Cu occurs as an oxide e.g., Cu₂O (cuprite).
- Zn and Pb occur as sulphates (SO₄²⁻) e.g., ZnSO₄.2H₂O (gunnite) and PbSO₄ (anglesite), respectively.
- As, on the other hand, occurs as an oxide e.g., As₂O₃ (arsenolite) and it may also be associated with Bi as bismuth arsenate (BiAsO₄).

On the other hand, XRD analyses reveals that the flash smelting furnace (FSF) dust comprises a metallic oxysulphase matrix, wherein:
- Cu occurs as CuFe₂O₄ (cuprosinel) and CuSO₄^{.}5H₂O (chalcanthite).
- Zn and Pb occur as sulphates (SO₄²⁻) e.g., ZnSO₄.2H₂O (gunnite) and PbSO₄ (anglesite), respectively.

The complicated background of the dust XRD pattern indicates that other minor elements may exist as amorphous species, which are not identifiable by XRD. The chemical state of Bi could not be determined due to their low concentrations. However, it is postulated that minor elements such as Bi are present as oxides in the ESP converter dust.

In a particular embodiment, the acid medium is an inorganic acid. In a more particular embodiment, the acid medium is HCI or a combination of HCI and H₂SO₄. In particular embodiments, the acid medium for leaching is commercially available hydrochloric acid (HCI) but it can also be supplied by bleed streams within the pyrometallurgical plant itself, and/or a mixture of sulphuric acid from the washing plant and hydrochloric acid (either commercial or bleed stream from the tank house electrolyte) introduced in the acid leach as a blend.

In a particular embodiment, the acid medium is hydrochloric acid, wherein the concentration of the hydrochloric acid is 10-16% HCI. In particular embodiments, the concentration of the hydrochloric acid is 10%, 11%, 12%, 13%, 14%, 15%, or 16% HCI, preferably 16% HCI. In a particular embodiment, the acid medium is a combination of hydrochloric acid and sulphuric acid, wherein the concentration of the hydrochloric acid is 10%, 11%, 12%, 13%, 14%, 15%, or 16% HCI, preferably 16% HCI, and wherein the concentration of the sulphuric acid is 5%, 6%, 7%, 8%, 9%, 10%, 11%, 12%, 13%, 14%, or 15% H₂SO₄, preferably 5% H₂SO₄. In particular embodiments, the pH of the leaching acid medium is under 0.5, under 0.4, under 0.3, under 0.2, or under 0.1. In particular embodiments, the pH of the leaching acid medium is between 0.5 and 0.1. In particular embodiments, the pH of the leaching acid medium is 0.5, 0.4, 0.2, or 0.1. In an embodiment, the acid medium is HCI, wherein the HCI is at a concentration of at least 0.3M, at least 0.32M, at least 0.35M, at least 0.5M, or at least 1M. In a different embodiment, the acid medium is a combination of HCI and H₂SO₄, wherein the HCI is at a concentration of at least 0.3M, at least .032M, at least 0.35M, at least 0.5M, or at least 1M and wherein the H₂SO₄ is at a concentration of at least 0.3M, at least 0.32M, at least 0.35M, at least 0.5M, or at least 1M.

In a particular embodiment, the leaching of step (a) is conducted at a temperature that does not entail external or additional heat sources. Instead, it typically occurs at a temperature of between 40-50°C due to the exothermic nature of the reaction. Thus, in an embodiment, the leaching reaction of step (a) occurs at a temperature of 40-50°C, without external heat sources.

In the second step of the method of the invention (that is, method step (b)), the Bi-rich leachate is titrated at a pH of between 1.0 and 3.5 by using a strong base to obtain a precipitate of bismoclite (BiOCI). In particular embodiments, the pH of the titrating strong base is between 1.0 and 3.5, between 1.0 and 3.0, between 1.0 and 2.7, between 1.0 and 2.2, or between 2.2 and 2.7. In other particular embodiments, the pH of the titrating strong base is 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, or 3.5. In a particular embodiment, the strong base is NaOH. In these cases, and due to the use of sodium hydroxide as neutralising agent, some sodium chloride interstitial impurities may or may not precipitate along with BiOCI(s). For this reason, in particular embodiments of the instant invention, the Bi end-product, BiOCI(s), is then subjected to water washing (i.e., milli-Q water washing) in order to remove the rest of water-soluble impurities, which are separated by any conventional method, e.g., centrifugation or filtration. The resulting Bi end-product from Bi precipitation stage depends on the neutralising agent used. For instance, the use of a calcium (Ca) compound, either calcium carbonate (CaCO₃) or calcium hydroxide (Ca(OH)₂), will lead to a diluted Bi end-product with hydrated calcium sulphate (CaSO₄^{.}2H₂O, gypsum). As an alternative, if a sodium or magnesium compound is used such as sodium hydroxide (NaOH), the Bi end-product will be concentrated. However, the selection of one or another will also rely on economic and environmental factors. Economic factors will opt for the use of the most inexpensive, locally available reagent whereas from an environmental point of view, the selected neutralising agent should be the one that results in an eco-friendly effluent which can be discharged off in landfills. In a particular embodiment, the strong base of step (b) of the method of the invention is NaOH.

As explained above, the ESP converter dust comprises various valuable elements and impurities (e.g., Cu, Zn and Cd) and there is an economic interest in recovering said valuable elements via a pre-treatment that is carried out prior to the leaching process.

In this context, the speciation or mode of occurrence of Cu (water-soluble or acid-soluble) may be different in the various solid impurity dust streams from smelter sources (e.g., ESP converter dust or FSF dust) and this mode of occurrence determines the conditions of the pre-treatment process. Accordingly, in a particular embodiment the method comprises, prior to step (a), a step (a1) of pre-treating by leaching the solid impurity stream in a first acid medium at a pH between 1 and 4 to obtain a first Cu-rich leachate and a first Bi-rich solid, wherein the first Bi-rich solid is then subsequently leached in place of the solid impurity stream of step (a). In particular embodiments, the pH of the first acid medium in step (a1) is between 1 and 4, between 1 and 3, or between 1 and 2. In a particular embodiment of the pre-treatment, the solid impurity stream is leached in a first acid medium, wherein the first acid medium is H₂SO₄. In particular embodiments, the first acid medium is 5% H₂SO₄, 10% H₂SO₄, 15% H₂SO₄, or 50% H₂SO₄. The source of said H₂SO₄ may be a bleed stream from the washing plant (typically with a pH <4). The pH of the first acid medium is between 1 and 4. In particular embodiments, the pH of the first and/or second acid medium is between 1.0 and 4.0, between 1.5 and 4.0, between 2.0 and 4.0, between 2.5 and 4.0, between 3.0 and 4.0, or between 3.5 and 4.0. Alternatively, the acid leach can also be performed with water, while bubbling a sulphur dioxide (SO₂)-rich exhaust flue gas, preferably from the flash furnace, since the flash smelting process produces gasses with a SO₂ content in the range between 25 and 30%. This pre-treatment yields a first Cu-rich liquid leachate and a first Bi-rich solid. The Cu-rich liquid leachate and the Bi-rich solid may be separated using conventional methods known to the person skilled in the art. The advantage of this pre-treatment step, sometimes called pulping, is that most of the acid-soluble copper, e.g., copper oxide (Cu₂O) present in this ESP converter dust can be solubilised in the acid leach as copper sulphate (Cu₂SO₄).

Apart from copper, other valuable impurities present in the dust such as Cd, Zn, Pb, As, Bi and Sb, may or may not solubilise depending on their mode of occurrence in the dust (i.e., chemical species). Cd and Zn are typically present in the ESP converter dust in the sulphate (SO₄²⁻) form and, as such, most of them can be solubilised in the acid leach if the acid medium is 5-15% H₂SO₄. Stronger acidic conditions may cause a reduction of their solubility. Arsenic, on the other hand, occurs as an oxide e.g., As₂O₃ (arsenolite) and it can be associated to Bi as bismuth arsenate (BiAsO₄) in the ESP converter dust, which explains the partial dissolution of As in the acid leach. In such an acid leach, As remains as arsenic acid (H₃AsO₄) and dihydrogen arsenate (H₂AsO₄⁻).

Experimental results show that As can be found as copper hydrogen arsenite (CuHAsO₃) in the acid medium if the concentration is <15% H₂SO₄. Lead occurs as PbSO₄ (anglesite) in the EPS converter dust and partially dissolves in the liquid acid leach where it remains as Pb(SO₄)₂. Most of the elements mentioned above dissolve in the liquid acid leach and remain in it as soluble metal-sulphate complexes. Generally speaking, and depending on the H₂SO₄ concentration, the pre-treatment can yield either a first Cu, As and Zn-rich liquid leachate (if the acid medium is 5-15% H₂SO₄) or a Cu and As-rich liquid leachate (if the acid medium is 50% H₂SO₄). As in the previous case, the liquid leachate and the Bi-rich solid may be separated using conventional methods known to the person skilled in the art.

The advantage of partially or totally solubilising Cu, Zn, Cd, among others, is that it reduces the need to remove these elements during latter method stages, and more importantly, it reduces the occurrence of metal impurities during Bi precipitation (i.e., the Bi end-product attains a higher degree of purity). Another advantage of the early solubilisation of the above-mentioned elements is that the acid leach pulp (where most of the copper (and other) impurities have been removed) can be further processed in different manners, for example by electrolytic deposition. A portion can also be discharged for a separated treatment e.g., recovery of CuSO₄ by crystallisation and/or chemical precipitation, which would allow for the recycling of Cu.

The key factors in the acid leach of this pre-treatment can be expressed as:
1) The liquid to solid ratio (L/S ratio) between the solid impurity stream (which can be for example the ESP converter dust), and the diluted acid (i.e., the first acid medium which, in some embodiments may be a bleed stream from the washing plant, whereas in other embodiments, it may be water relatively acidified by SO₂ hydrolysis). In particular embodiments, the L/S ratio is between 9:1 and 2:1, between 7:1 and 3:1, or between 5:1 and 4:1. In a particular embodiment, the L/S ratio is 4:1 (liquid to solid).
2) The pulp density of the slurry, expressed as a percentage of solids (% solids), which in turn is dependent on the Cu concentration in the acid leach. In particular embodiments, the pulp density is 10-35% solids, 12-30% solids, 15-25% solids, or 18-22% solids. In a preferred embodiment, Cu concentration may be desirable to be upper 100 g/L with a pulp density about 18-22% solids. In yet another embodiment, the pulp density can be up to 35% solids.

In this pre-treatment stage, the solid impurity stream (which can be for example the ESP converter dust) is pulped for a sufficient period of time e.g., from one to four hours, preferably from one to two hours, to solubilise part (if not most) of the Cu present it the dust. In a particular embodiment, the solid impurity stream is leached for at least 1 hour, for at least 2 hours, for at least 3 hours, for at least 4 hours, or for at least 5 hours. After the solubilisation of Cu and/or other impurities, the acid leach is subjected to solid/ liquid separation by any conventional mechanism e.g., centrifugation. The leached acid phase can then be forwarded to a first As stabilisation/ removal step, followed by a Cu precipitation stage (e.g., electrolytic deposition of Cu), or bled from the system for alternative processing, or a combination of these stages. The solid fraction of the pulp may then be subjected to water washing (e.g., with milli-Q water) to remove the rest of water-soluble impurities and forwarded to a solid/ liquid separation by any conventional mechanism e.g., centrifugation. The leached acid phase can then be forwarded to a second As stabilisation/ removal step, followed by a Cu precipitation stage (e.g., electrolytic deposition of Cu), or bled from the system for alternative processing, or a combination of these stages.

As additional steps, in particular embodiments the method of the invention comprises, prior to step (a) but after step (a1), a step (a2) of washing the solid impurity stream in step (a) or the first Bi-rich solid obtained in step (a1) in water, preferably MilliQ water. In other embodiments, the method of the invention comprises, after step (b), a further step (c) of washing the precipitate of BiOCI obtained in step (b) in water, preferably MilliQ water. In still further embodiments, the method of the invention comprises, after step (b) or after step (c), a further step (d) of calcinating the precipitate of BiOCI at a temperature between 300-400°C.

The solid fraction resulting from the acid leach of step (a) of the method of the invention, with still contain low concentrations of As and variable concentrations of Pb, can be recycled back to the smelter, or bled for alternative processing, or it can be treated using a combination of these stages. If the content of Pb and As in the solid fraction is low, then the recycling of a part of the solid fraction back to the smelter could also be feasible under controlled conditions. It has been proven that a certain amount of Pb is desirable in order to control Bi and Sb during the electrorefining of Cu. Similarly, it has been demonstrated that a certain, minimum concentration of As in the electrolyte is desirable, as it prevents Sb oxidation. However, an excessive concentration of As in the electrolyte can have adverse effects by formation and precipitation of Sb and Bi arsenates. Both Sb and Bi concentrations need to be tightly controlled below specific threshold levels. In this regards, a molar fraction ratio (MFR) can be determined in the electrolyte with respect to As and defined as MFR = As/(Sb + Bi); the reason being that Bi and Sb are related to the formation of a floating sludge. If these ideal conditions are not encountered, then a proportion of the solid fraction is forwarded to the initial stages of this invention, part of it is recycled back to the smelter because of the precious metal content, and/or further processed in alternative processes, e.g., lead smelter.

The liquid fraction resulting after the pre-treatment acid leach of step (a1) (or optionally of the pre-treatment acid leach of step (a2)) of the method of the invention is typically rich in Cu, As, and Zn if the first or second acid medium is e.g. 5-15% H₂SO₄, and rich in Cu and As if the first or second acid medium is e.g. 50% H₂SO₄. Arsenic is a toxic impurity that needs to be discarded of in a safely manner. This As-rich liquid can be contacted with iron sulphate (Fe₂(SO₄)₃) in order to precipitate scorodite (FeAsO₄^{.}2H₂O). Scorodite is an environmentally friendly species of arsenic that can be discarded without posing a toxic threat to the environment. Once arsenic has been discarded, copper is recovered from the As-free liquid fraction by electrolytic deposition. Similarly, the liquid fraction resulting after the titration of the bismoclite precipitate in step (b) of the method of the invention is typically rich in arsenic, which is a toxic impurity that needs to be discarded of in a safely manner. This As-rich liquid can be contacted with iron sulphate (Fe₂(SO₄)₃) in order to precipitate scorodite (FeAsO₄^{.}2H₂O). Scorodite is an environmentally friendly species of arsenic that can be discarded without posing a toxic threat to the environment.

Accordingly, the method of the present invention allows firstly for the recovery of added-value raw materials such as Bi in an energy-efficient manner, but it also allows for a safe disposal route for As, which is, from an environmental perspective, more respectful than existing alternatives currently in use during the primary production of Cu. The process/treatment of this invention also allows in some embodiments for the use of bleed streams that act as H⁺ and Cl⁻ source to facilitate the dissolution of Bi in the second acid leached stage. These alternatives can be categorised as valorisation measures for acidic streams generated during the primary production of copper. The process/treatment of this invention allows for the solubilisation of Cu, Zn, Cd, among others, partially or totally, in early stages and more importantly, the reduction in the size of the acid leach and Bi precipitation. The advantage of the early solubilisation of the above-mentioned elements is that the acid leach pulp (where mostly Cu and/or other impurities are dissolved) can be further processed in different manners, for example Cu can be recovered by electrolytic deposition. Finally, the process/ treatment of this invention also allows for the selective recovery of Bi from Pb. The solid fraction of the acid leach of step (a) of the method of the invention, which still has (very low) residual concentrations of As and variable concentrations of Pb, can be recycled back to the smelter, or bled for alternative processing, or a combination of these stages. If the content of Pb and As in the solid fraction is low, then the recycling of part of the solid fraction back to the smelter could also be feasible under controlled conditions.

In another aspect, the invention relates to a method for the recovery of valuable materials and for the safe disposal of toxic contaminants from a solid impurity stream generated during the pyrometallurgical production of copper, wherein the method comprises the steps of:
a) Leaching the solid impurity stream in a first acid medium at a pH between 1 and 4 to obtain a first Cu-rich leachate and a first Bi-rich solid, wherein the first acid medium is H₂SO₄;
b) Optionally, washing the first Bi-rich solid obtained in step (a) in water, preferably MilliQ water, to obtain a second Cu-rich leachate and a second Bi-rich solid;
c) Leaching the first Bi-rich solid obtained in step (a) or the second Bi-rich solid obtained in step (b) in a second acid medium at a pH under 0.5 to obtain a Bi-rich leachate and a Pb-rich solid, wherein the second acid medium is HCI or a combination of HCI and H₂SO₄;
d) Titrating the Bi-rich leachate at a pH between 1.0 and 3.5 by using a strong base to obtain a precipitate of bismoclite (BiOCI) and an As-rich liquid;
e) Optionally, washing the precipitate of bismoclite (BiOCI) obtained in step (d) in water, preferably MilliQ water;
f) Optionally, calcinating the precipitate of BiOCI obtained in step (e) or the washed precipitate of BiOCI obtained in step (f) at a temperature between 300-400°C;
g) Contacting the As-rich liquid with iron sulphate (Fe₂(SO₄)₃) to precipitate scorodite (FeAsO₄^{.}2H₂O).

In the titrating step of the method of the invention, the Bi-rich leachate is titrated at a pH of between 1.0 and 3.5 by using a strong base to obtain a precipitate of bismoclite (BiOCI). In particular embodiments, the pH of the titrating strong base is between 1.0 and 3.5, between 1.0 and 3.0, between 1.0 and 2.7, between 1.0 and 2.5, between 1.0 and 2.2, or between 1.0 and 2.0. In other particular embodiments, the pH of the titrating strong base is 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, or 3.5. In a particular embodiment, the strong base is NaOH. In these cases, and due to the use of sodium hydroxide as neutralising agent, some sodium chloride interstitial impurities may or may not precipitate along with BiOCI (s). In the process of this invention, the Bi end-product (BiOCI (s)) may then be subjected to water (i.e., milli-Q water) washing to remove the rest of water-soluble impurities, which are separated by any conventional method, e.g., centrifugation or filtration.

In a particular embodiment, the solid impurity stream is dust from a copper matte converter source. Copper matte conversion is the process by which the copper is separated from the left-over sulphur, iron and other metals not eliminated in an earlier smelting stage during the pyrometallurgical production of copper. Conversion is a strong exothermal process, so secondary materials, such as recycled copper, can be added during conversion without the need for extra fuel in order to generate more heat. Like in flash smelting, it is common practice to enrich the air used in the process with oxygen. Conversion yields a product called blister copper, which has a copper content of approximately 99%. The process of copper matte conversion in a converter produces particle-carrying gases that need to be dusted off in hot electrostatic precipitators (ESP) before said gases are sent along to the gas cooling and scrubbing section. The gas resulting from copper matte conversion typically carries 5-10% SO₂. The process of dusting off the particle-carrying gases in hot electrostatic precipitators (ESP) results in a solid impurity stream that is referred to as dust from the copper matte converter source. Thus, in a particular embodiment the dust from a copper converter source is dust collected in an electrostatic precipitator (ESP).

In a preferred embodiment, the ESP converter dust (that is, the particles contained in the flue gas from the converter and which are collected in the ESP) comprises, as major elements (that is, elements at a concentration ≥1%), Cu, Zn, S, Pb, As, and Bi.

Major element Cu is present at a concentration of 20-24%. Major element Cu is present at a concentration of 20%, 21%, 22%, 23% or 24%, preferably 21%. Major element S is present at a concentration of 10-14%. Major element S is present at a concentration of 10%, 11%, 12%, 13% or 14%, preferably 12%. Major element Zn is present at a concentration of 10-14%. Major element Zn is present at a concentration of 10%, 11%, 12%, 13% or 14%, preferably 12%. Major element Pb is present at a concentration of 6.0-8.0%. Major element Pb is present at a concentration of 6.0%, 6.5%, 6.7%, 6.9%, 7.0%, 7.5% or 8.0%, preferably 6.9%. Major element As is present at a concentration of 3.0-5.0%. Major element As is present at a concentration of 3.0%, 3.5%, 3.7%, 3.8%, 3.9, 4.0, 4.5 or 5.0%, preferably 3.8%. Major element Bi is present at a concentration of 1.0-2.0%. Major element Bi is present at a concentration of 1.0%, 1.1%, 1.2%, 1.3%, 1.4%, 1.5%, 1.6%, 1.7%, 1.8%, 1.9% or 2.0%, preferably 1.5%. The ESP converter dust sample is highly enriched in Bi (11378-13004 mg/kg) which make this by-product a source with a potential perspective for Bi recovery. Additionally, the ESP dust may comprise Mo and Tl at concentrations that can reach over 300 ppm in some samples. Further, the ESP dust may also comprise Cd at variable concentrations, exceeding 100 ppm in certain ESP converter dust samples. In contrast, the flash smelting furnace (FSF) dust comprises, predominantly, Cu (21%), Fe (14%), S (12%), As (2.3%), Zn (2.0%) and Pb (1.8%). The concentration of Bi (which can be about 6900 mg/kg) in the flash smelting furnace (FSF) dust is approximately half of that in the ESP converter dust. The differences can be illustrated in table A below, which shows typical percentage values of the major elements present in FSF dust and in ESP converter dust.

**Table A. Differences in typical percentage values of major elements present in FSF dust versus major elements present in ESP converter dust.**

| **Major element** | **ESP converter dust** | **FSF dust** |
|---|---|---|
| Cu | 21% | 21% |
| S | 12% | 12% |
| Zn | 12% | 2.0% |
| Pb | 6.9% | 1.8% |
| As | 3.8% | 2.3% |
| Bi | 1.5% (approx. 13000mg/kg) | 0.7% (approx. 6900mg/kg) |
| Fe | 1.0% | 14% |

In terms of the species that can be found in the solid impurity streams, XRD reveals that the ESP converter dust (that is, the particles contained in the flue gas from the converter, and which are collected in the ESP) comprises a metallic oxysulphate matrix, wherein:
- Cu occurs as an oxide e.g., Cu₂O (cuprite).
- Zn and Pb occur as sulphates (SO₄²⁻) e.g., ZnSO₄.2H₂O (gunnite) and PbSO₄ (anglesite), respectively.
- As, on the other hand, occurs as an oxide e.g., As₂O₃ (arsenolite) and it may also be associated with Bi as bismuth arsenate (BiAsO₄).

On the other hand, XRD analyses reveals that the flash smelting furnace (FSF) dust comprises a metallic oxysulphase matrix, wherein:
- Cu occurs as CuFe₂O₄ (cuprosinel) and CuSO₄^{.}5H₂O (chalcanthite).
- Zn and Pb occur as sulphates (SO₄²⁻) e.g., ZnSO₄.2H₂O (gunnite) and PbSO₄ (anglesite), respectively.

The complicated background of the dust XRD pattern indicates that other minor elements may exist as amorphous species, which are not identifiable by XRD. The chemical state of Bi could not be determined due to their low concentrations. However, it is postulated that minor elements such as Bi are present as oxides in the ESP converter dust.

All the terms and embodiments described in this document are equally applicable to all aspects of the invention. It should be noted that, as used in the specification and in the appended claims, the singular forms "a", "an", and "the" include their plural referents unless the context clearly indicates otherwise. Similarly, the term "comprises" or "comprising" as used herein also describes "consists of" or "consisting of" in accordance with generally accepted patent practice.

### EXAMPLES

The following invention is hereby described by way of the following examples, which are to be construed as merely illustrative and not limitative of the scope of the invention.

### Example 1: Preliminary optimisation of key experimental parameters

In the context of the pyrometallurgical process for the recovery of Cu, the electrostatic precipitator (ESP) converter dust is a solid by-product resulting from the removal, in a hot ESP, of solid particles carried in the flue gas that derives from the converter.

Table 1 shows the concentration of different elements in ESP converter dust samples from two different containers. Chemical analysis shows that the major elements (≥1000 ppm) in ESP converter dust samples are Cu, S, Zn, Pb, As, Bi and Fe. The concentrations of other elements such as Mo and Tl can reach over 300 ppm in some samples, whereas the concentration of Cd is variable, exceeding 100 ppm in certain ESP converter dust samples. It should be noted that ESP converter dust is highly enriched in Bi (11378-13004 mg/kg) which makes this by-product a possible source for Bi recovery with potential economic interest.

**Table 1. Concentration of major, minor and trace elements in ESP converter dust samples.**

| | Container 1 | | | Container 2 | | |
|---|---|---|---|---|---|---|
| | ESP converter dust | | | ESP converter dust | | |
| | Sample 1 | Sample 2 | Sample 3 | Sample 1 | Sample 2 | Sample 3 |
| mg/kg | | | | | | |
| Cu | 194979 | 216192 | 193448 | 194216 | 181120 | 200015 |
| S | 111038 | 112993 | 110904 | 115493 | 110946 | 125848 |
| Zn | 105643 | 98518 | 102988 | 109870 | 108054 | 121851 |
| Pb | 64014 | 63269 | 61043 | 57969 | 58629 | 69218 |
| As | 42089 | 38257 | 39201 | 30655 | 38799 | 40415 |
| Bi | 13555 | 12586 | 12864 | 11378 | 13004 | 14138 |
| Fe | 9292 | 10157 | 9138 | 9524 | 9159 | 9824 |
| Cd | 9170 | 8148 | 8414 | 6427 | 8202 | 8668 |
| Al | 1143 | 1121 | 1114 | 1020 | 1131 | 1255 |
| Mo | 557 | 546 | 544 | 553 | 572 | 634 |
| Ni | 459 | 521 | 478 | 485 | 459 | 492 |
| Ca | 411 | 454 | 363 | 333 | 230 | 295 |
| Tl | 355 | 336 | 344 | 394 | 391 | 428 |
| Sb | 160 | 199 | 147 | 121 | 161 | 179 |
| Sn | 99 | 165 | 121 | 147 | 105 | 289 |
| Ba | 82 | 125 | 65 | 70 | 79 | 110 |
| B | 70 | <0.01 | 22 | 10 | 1.9 | 55 |
| Ti | 43 | 62 | 60 | 121 | 42 | 69 |
| Co | 21 | 23 | 22 | 23 | 21 | 23 |
| Se | 20.8 | 11.0 | 22.2 | 20.0 | 16.3 | 15.0 |
| Ge | 14 | 13 | 13 | 14 | 9.0 | 15 |
| Mn | 8.4 | 15.1 | 11.0 | 9.9 | 8.3 | 10.4 |
| Cr | 6.3 | 10.6 | 7.3 | 6.4 | 6.7 | 6.4 |
| Rb | 5.2 | 5.2 | 5.9 | 5.7 | 5.0 | 5.9 |
| Sr | 4.7 | 6.7 | 3.6 | 7.5 | 5.3 | 5.7 |
| V | 2.5 | 2.8 | 2.6 | 2.9 | 2.6 | 2.8 |
| W | 2.0 | 2.2 | 16.9 | 1.8 | 2.2 | 2.1 |
| Cs | 1.4 | 0.9 | 0.9 | 0.9 | 1.0 | 1.1 |
| Li | 0.8 | 2.0 | 1.6 | <0.01 | <0.01 | 5.0 |
| Hg | 0.03 | 0.03 | 0.03 | 0.03 | 0.03 | 0.03 |
| Be | <0.01 | 3.3 | 1.3 | <0.01 | <0.01 | <0.01 |
| K | <dl | <dl | <dl | <dl | <dl | <dl |
| Mg | <dl | <dl | <dl | <dl | <dl | <dl |
| Na | <dl | <dl | <dl | <dl | <dl | <dl |
| P | <dl | <dl | <dl | <dl | <dl | <dl |

| | | | | | | |
|---|---|---|---|---|---|---|
| dl = detection limit. | | | | | | |

In terms of chemical species, XRD shows that the crystalline minerals that are present in ESP converter dust samples consist mainly of gunnite (ZnSO₄.2H₂O, 72%) together with minor proportions of anglesite (PbSO₄, 21%) and cuprite (Cu₂O, 4.4%). Traces of arsenolite (As₂O₄, 1.8%) are also present in the ESP converter dust samples. The complicated background of the ESP converter dust indicates that elements, apart from those mentioned above, may exist as amorphous species and/or in a concentration lower than 1%, which is not identifiable by XRD. In particular, the chemical species of Bi cannot be determined due to its low concentration in the ESP converter dust. However, thermal analysis of the ESP converter dust offers some insights into the composition of the material. In particular:
- Thermal analysis by thermogravimmetry (TGA) in the range 30-130°C shows two events of loss of weight at 46°C (0,387%) and 126°C (0,443%), which correspond to the dehydration of CuSO₄.5H₂O (CuSO₄.5H₂O ↔ CuSO₄.3H₂O + ½ SO₃), wherein the discarded humidity is in the range 0.17-0.25%.
- Thermal analysis by thermogravimmetry (TGA) in the range 130-350°C shows loss of weight at 193°C (6,058%), which indicates a loss of a molecule of H₂O. However, this could come from either CuSO₄.3H₂O or any of CuSO₄.nH₂O due to the differences in the loss of weight. The graph indicates in any case that this is a clear endothermic process.
- Thermal analysis by thermogravimmetry (TGA) in the range 350-560°C shows loss of weight between 298°C and 552°C (with a derivative T peak 493°C), which is compatible with reaction Bi₂(SO₄)₃ ↔ Bi₂O₃ + 3SO₃, and with reaction Bi₂O₂(CO₃)₃ ↔ Bi₂O₃ + CO₂.
- Thermal analysis by thermogravimmetry (TGA) in the range 550-1000°C shows 3 stages of decomposition of Cu compounds, corresponding to a first decomposition at 603°C (T max: 660°C), a second decomposition at 759°C (T max 787°C) and a third decomposition not fully determined but with a T max: 863°C.
- Closer inspection in the Range from 800 to 1000°C shows an event of loss of weight with a T max 193°C (1,94%), compatible with either decomposition of ZnO (comes from ZnSO₄.nH₂O) and/or PbSO₄.

Moreover, Raman spectroscopy of ESP converter dust samples obtained from two different positions shows mainly a mixture of Anglesite (PbSO₄) and Gunningite (ZnSO₄.2H₂O), wherein specific samples also present strong bands around 1000 cm-1, which could also indicate the presence of Dolerophanite (Cu₂O(SO₄). In terms of bismuth species, specific ESP converter dust samples present bands around 850 cm-1, which would appear to indicate the presence of Bismuth Arsenate at weak concentration in the form of Atelesite (Bi₂(AsO₄)O(OH)) and Rooseveltite (Bi₂(AsO₄). Other particular ESP converter dust samples specially present a strong band around 1050 cm-1, which would also indicate the presence of bismutite (Bi₂O(CO₃)) at weak concentration.

On the other hand, it is also postulated that Bi is present as oxides (e.g., Bi₂O₃) in the dust and partially associated to As as bismuth arseniate (BiAsO₄ (s)). In these regards, it should be noted that the recovery of Bi by leaching into an aqueous phase depends on the mode of occurrence (speciation) of Bi in the dust. Metal dissolution studies have indicated that H₂SO₄ does not readily and completely dissolve Bi compounds due to the fact that Bi in a diluted sulphuric acid solution hydrolyzes with precipitation of basic bismuth sulphate (BiSO₄). On the other hand, Bi oxide (e.g., Bi₂O₃) is insoluble in chloride medium at higher pH values. However, bismuth sulphate is readily soluble in chloride medium.

Taken together, the above experimental evidence suggests that the composition of the ESP converter dust may be defined as:
- 60.9% crystalline, wherein the main species are PbSO₄(16.2%), ZnSO₄ (38.8%) and Cu₂O(SO₄); and
- 39.1% amorphous, wherein the main species are Bi₂(SO₄)₃, Bi₂O₂(CO₃) and Bi₂(AsO₄)O(OH) BiAsO₄.

In view of the above, and given the solid matrix nature of the ESP converter dust residue, a leaching process of the ESP converter dust using an inorganic acid (e.g., HCI) is necessary to obtain a Bi-rich leachate (aqueous solution) where the Bi end-product can be recovered from. For this reason, several leaching tests were performed to acquire the key parameters of the leaching test, wherein the L/S (liquid to solid) ratio was kept fixed at 4:1. The optimised parameters were:
- Leaching-time;
- Strength of the leaching agent: HCI molarity;
- Acidity of the ESP converter dust pH enough to obtain a pH~0.4 and a leaching of Bi ≥50%.

Several leaching tests were performed to evaluate and estimate whether the duration of the leaching test can have a potential effect on the amount of Bi leached from the ESP converter dust. Accordingly, 3 single batch leaching tests with 3 duplicates per test were performed using HCI 0.1 and 1.0 M leachant agent at an L/S (liquid to solid) ratio of 0.4 L/100 g and 2, 3, and 4 hours of agitation time in an orbital shaker. After leaching tests, the leachates were centrifugated in a centrifuge at 4500 rpm.

Table 2 shows the concentration of Bi in the leachate and the %Bi leached calculated in relation to the total concentration of Bi (12920 mg/kg) in the ESP converter dust. As it can be observed in Table 2, the concentration leached of Bi in the leachate increases with the duration of the leaching test using HCI 0.1 M as leachant agent. However, despite the positive correlation between the leached concentration of Bi and the leaching duration, the strength of the leachant agent, 0.1M HCI acid, is not enough to achieve a Bi-rich leachate, as shown by the low leaching efficiency attained. On the other hand, the concentration of Bi in the liquid leachate also increases with the duration of the leaching tests using HCI 1M as leaching agent, but it barely improves with time as opposed to what it would be expected. The leached concentration of Bi in the liquid phase whose leaching process lasted for 3 hours is just a 0.25% higher than in that whose process lasted for 2 hours. Similarly, the leached concentration of Bi in the liquid leachate whose leaching process lasted for 4 hours is a 0.20% higher than in that whose process lasted for 3 hours. However, it should also be noted that using HCI 1M as leachant agent, the leaching efficiency of Bi from the ESP converter dust is 50-53.2%.

**Table 2. Key parameters of the leaching tests and characteristics of the Bi-rich leachate.**

| HCI molarity | Time of agitation (hours) | Bismuth (mg/L) | % leaching efficiency |
|---|---|---|---|
| 0.1 M | 2 | 2.7 | 0.02 |
| 0.1 M | 3 | 3.7 | 0.03 |
| 0.1 M | 4 | 4.1 | 0.03 |
| 1 M | 2 | 3561 | 51.6 |
| 1 M | 3 | 3570 | 50.8 |
| 1 M | 4 | 3577 | 53.2 |

In view of these results, 3 single batch leaching tests were also performed with 3 duplicates per test using HCI 4M leachant agent at a L/S (liquid to solid) ratio of 0.4 L/100 g during 1, 1.5, and 2 hours of agitation in an orbital shaker following the aforementioned methodology, the purpose being to achieve a Bi-rich leachate (>53%). Table 3 shows the concentration of Bi in the leachate and the leaching efficiency of the process calculated in relation to the total concentration of Bi (12920 mg/kg) in the ESP converter dust. As it can be observed in Table 3, the batch leaching tests indicated that the leached concentration of Bi in the liquid leachate does not increase with the duration of the leaching test using HCI 4M as a leachant agent. The leaching test applied to the ESP converter dust using HCI 4M as leachant agent for 1 hour allows a leaching efficiency of Bi of 94%, which indicates that the efficiency of the recovery protocol can be improved by adjusting some of the key parameters under evaluation.

**Table 3. Key parameters of the leaching tests and characteristics of the Bi-rich leachate.**

| HCI molarity | Time of agitation (hours) | Bismuth (mg/L) | % leaching efficiency |
|---|---|---|---|
| 4 M | 1.0 | 4095 | 94.0 |
| 4 M | 1.5 | 4044 | 93.7 |
| 4 M | 2.0 | 4060 | 92.0 |

In these particular experiments, the key parameter strength of the leachant agent (source of H⁺ and Cl⁻) was fixed at HCI 4M because one of the possible bleed streams generated at a smelter facility is a 4-6 M HCI stream. Accordingly, leaching tests using HCI with a maximum molarity of 4 would be suitable for upscaling as part of an environmentally and economically sustainable method that employs, as the leachant agent for the leaching stage, one of the effluents generated at a smelter facility. Once key parameters were fixed as discussed above, several leaching tests were applied to the ESP converter dust according to:
- The L/S (liquid to solid) ratio: 4:1;
- The leaching-timing: 2 hours;
- The Cl⁻ source: HCl 4M;
- The acidity of the ESP converter dust pH enough to obtain a pH~0.4 and a leaching of Bi ≥50%.

The leaching process consisted, therefore, of a single batch leaching test using HCI (4M) as leachant agent at an L/S (liquid to solid) ratio of 0.4 L/100 g and 2 h of agitation time in an orbital shaker. After leaching tests, the leachates were centrifuged in a centrifuge at 4500 rpm. The Bi-rich leachate was then analysed by ICP-AES to determine the concentration of Bi using the Iris Advantage Radial ER/S device from Thermo Jarrell-Ash (Table 4). A previous semi-quantitative analysis was carried out to identify the range of element concentrations as well as the matrix and the possible spectral interferences. The calibration was carried out by means of the international certified standard (1000 and 10.000 ppm). Most of the trace elements were analyzed by ICP-MS using the X-SERIES II device from Thermo Fisher SCIENTIFIC. The quantitative analysis was carried out using an extern standard with similar matrix of the samples, which covered concentrations range expected forming the calibration lines. The intern correction was carried out by means of an intern standard (In 10 ppb).

**Table 4. Concentration and pH of elements in the Bi-rich leachate.**

| **Characterisation of the [Bi]-rich leachate** | |
|---|---|
| [Zn] | 30650 mg/L |
| [S] | 21965 mg/L |
| [Cu] | 18300 mg/L |
| [As] | 10635 mg/L |
| **[Bi]** | **6376 mg/L** |
| [Cd] | 3226 mg/L |
| [Fe] | 1004 mg/L |
| [Sb] | 158 mg/L |
| *pHₒ* | *-0. 869* |
| *Leaching-time* | *2 hours* |
| *Reactant* | *HCl 4M* |

Next, Bi was recovered by precipitation of BiOCI (s) by pH control of the acidic Bi-rich leachate. To this end, the Bi-rich leachate was titrated with controlled dosages of NaOH (integrated NaOH volume) under pH-control and at laboratory temperature (25°C ± 0.5) using an 848 Tritino Plus, the purpose being to control the pH evolution vs NaOH volume. As the titration progressed (evolution of the pH vs NaOH volume), 50 mL of precipitate were extracted as follows: phase 1 (pH 2.52), phase 2 (pH 3.72), phase 3 (pH 4.75), phase 4 (pH 5.5), and phase 5 (pH 6.0). The pH value of the leachate increases progressively until a pH ≃ 2.0, when it exponentially increases until a pH ≃8.0 and the experiment ends (Figure 2). After extraction of the 50 mL of each precipitate, a separation of the solid from the aqueous phase was performed in a centrifuge at 4500 rpm for 20 min. Following the recovery of the precipitate, precipitates were divided into three samples. A sample was dried at 35°C in a lab's stove, the second precipitate was washed with Milli-Q H₂O and, the third one was washed with a HCI solution (pH 2.43) to displace interstitial solutions. Following the washing process, samples were dried at low temperature (35°C) for 24 hours for further XRD and ICP analysis.

Precipitates were analysed by XRD in order to identify the main crystalline phases present. Thus, analysed precipitates were finely ground, homogenised, and bulk composition was determined. XRD is a rapid analytical technique primarily used for phase identification of a crystalline material and can provide information on unit cell dimensions. However, it should be noted in here that XRD analysis allows the identification of crystalline phases. Amorphous phases and solid phases with a concentration <1% cannot be identified by XRD. The powder X-Ray Diffraction (XRD) data were collected in the IDAEA-CSIC X-Ray laboratory using a Bruker D8 Advance diffractometer with CuKa radiation (λ=1.5405 Å) operated at 40KV and 40mA. The primary parallel X-ray beam was generated by a Göbel mirror and the scattered beam was analysed by a Sol-X detector. The diffractograms were obtained from 5° to 120° 2θ with a step of 0.02° and a counting time of 10 s. DIFFRAC.EVA software of Bruker, which uses ICDD database (International Centre for Diffraction Data), version PDF 2-Release 2010 (Powder Diffraction File), was used for crystalline phase identification. Table 5 shows the crystalline phases identified by XRD analyses in the Bi end-products at different pHs. The crystalline minerals in the precipitate recovered at a pH of 2.52 whether washed with Milli-Q water or HCI consists mainly of bismoclite (BiOCI) together with minor proportions of roosevellite (BiAsO₄).These results indicate that the recovery protocol of Bi as BiOCI from the ESP converter dust is feasible according to our recovery protocol, but operating conditions need to be adjusted. On the other hand, the washing process apparently displaces interstitial, but impurities still remain.

**Table 5. Crystalline phases identified from the X-ray diffraction patterns.**

| **pH** | **Crystalline phases (Samples with no treatment)** | **Crystalline phases (Milli-Q washed samples)** |
|---|---|---|
| 2.52 | • Bismoclite, syn - BiOCI | • Bismoclite, syn - BiOCI |
| | • Rooseveltite, syn - BiAsO₄ | • Rooseveltite, syn - BiAsO₄ |
| 3.72 | • Halite, syn - NaCl | • Halite, syn - NaCl |
| | • Rooseveltite, syn - BiAsO₄ | • Rooseveltite, syn - BiAsO₄ |
| 4.7 | • Halite, syn - NaCl | • Halite, syn - NaCl |
| | • Rooseveltite, syn - BiAsO₄ | • Unnamed, syn-Zn₁₂(SO₄)₃Cl₃(OH)₁₅.5H₂O |
| | • Duftite, syn - (PbCuAsO₄(OH)) | |
| | • Sodium Zinc Chloride Hydrated, syn - Na₂ZnCl₄.3H₂O | |
| 5.5 | • - | • Halite, syn - NaCl |
| | | • Unnamed, syn-Zn₁₂(SO₄)₃Cl₃(OH)₁₅.5H₂O |
| 6.0 | • - | • Halite, syn - NaCl |
| | | • Gordalite, syn-NaZn₄(SO₄)Cl(OH)₆.6H₂O |
| | | • Thernardite, syn- Na₂SO₄ |

In relation to the precipitate recovered at a pH of 3.72, the crystalline minerals identified are NaCl and BiAsO₄, while BiOCI was not identified. However, it should be noted that this does not rule out the occurrence of other crystalline or solid phases which concentration is not high enough (1%) to be detected by XRD and/or a formation of amorphous BiOCI solid phase, which cannot be detected by XRD. In relation to the precipitated recovered at a pH of 4.75 with no washing treatment, the crystalline minerals identified are NaCl and BiAsO₄ with lower proportions of duftite (PbCuAsO₄(OH)) and a Na-Zn-Cl unnamed mineral. The precipitate washed with an HCI solution (pH 2.43) consists of NaCl and a Zn-SO₄-Cl hydrated unnamed mineral. However, as mentioned above, this does not rule out the occurrence of other crystalline or solid phases which concentration is not high enough (1%) to be detected by XRD and/or a formation of amorphous BiOCI solid phase, which cannot be detected by XRD. The crystalline minerals in the precipitate recovered at a pH of 5.5 whether washed with Milli-Q water or HCI consists mainly of NaCl and lower proportions of a Zn-SO₄-Cl hydrated unnamed mineral. The crystalline minerals in the precipitate recovered at a pH of 6.0 washed with Milli-Q water consists mainly of NaCl and gordalite (NaZn₄(SO₄) Cl(OH)₆.6H₂O) and minor portions of thenardite (Na₂SO₄) and Zn-SO₄-Cl hydrated unnamed mineral.

According to these preliminary results, the recovery protocol at a pH of 2.52 appears to be the most efficient. However, given the significant amount of impurities, the recovery protocol was adjusted in order to improve the recovery efficiency of the Bi end-product. This protocol was optimised either by:
a) including a calcination step during the final stages of bismoclite precipitation, or by
b) including a pre-treatment step before the acid leaching stage.

### Example 2: Optimised bismoclite recovery by calcination

ESP converter dust samples were processed as described in Example 1, up to the point where a Bi-rich leachate resulting from the leaching stage was titrated with controlled dosages of NaOH (integrated NaOH volume) at laboratory temperature (25°C ± 0.5) using an 848 Tritino Plus, the purpose being to control the pH evolution vs NaOH volume. Figure 2 shows the evolution of the Bi-rich leachate pH vs dosages of NaOH (mL). As it can be observed, the pH of the leachate gradually increases until a pH ≃ 0.1 when it exponentially increases until a pH ≃5.5 when the experiment ends. Along the titration process, evolution of the pH vs NaOH volume, 50 mL of precipitated were extracted as follows: phase 1 (pH 2.5), phase 2 (pH 3.5), phase 3 (pH 4.5), and phase 4 (pH 5.5). Precipitates were no longer extracted at pHs > 5.5 as BiOCI (s) does not precipitate at higher pHs>5.5 values as was observed in the prior recovery protocols. The precipitates were centrifuged to separate the solid from the aqueous phase. The precipitate was then washed with Milli-Q water to displace interstitial solutions and impurities (soluble salts). The washing stage consisted of adding 45 mL of Milli-Q water to the falcon tubes where the precipitate was recovered followed by automatic-agitation in a lab shaker REAX 2000 for 10 minutes. After agitation, the recovered precipitate was centrifuge for a second time at 4500 rpm for 20 minutes. X-Ray Powder Diffraction (XRD), the precipitates were recovered and dried at low temperature (35±2.0°C) for 24 hours. A fraction of the samples were also subjected to a calcination treatment for two hours at 347°C.

Following the 24 hours, the precipitates were finely ground and homogenised, for XRD analysis according to the methodology discussed above. Table 6 shows the crystalline phases identified by XRD analyses in the Bi end-products at different pHs. The crystalline minerals in the precipitate recovered at a pH of 2.5 with no thermal and washing treatment are halite and bismoclite (BiOCI) with varying proportions of roosevellite and dansite, which indicates on the one hand, that Bi can be recovered by following the recovery protocol postulated, and on the other, that the washing stage with Milli-Q water is indispensable to displace interstitial solutions and impurities (soluble salts) to obtain a more pure BiOCI (s).

The difractogramm of the precipitate recovered at a pH of 2.5, washed with Milli-Q water, dried (35°C), and calcinated (347°C) shows bismoclite as the main crystalline mineral in the precipitate with a minimum amount, traces, of halite, which indicates that Bi can be recovered efficiently from the ESP converter dust as BiOCI (s) according to our recovery protocol, but an improvement of the washing process could definitely help to displace the remaining halite impurities, thus improving the quality of the Bi end-product. The crystalline minerals in the precipitate recovered at the pHs of 3.5, 4.5, and 5.5 with no thermal and/or washing treatment are also halite and bismoclite (BiOCI) with varying proportions of dansite. No roosevellite is identified by XRD in the precipitates recovered at the pH values mentioned above, what may indicate that pH precipitation window of this mineral in the Bi-rich leachate may be between 0.4-2.5 pH. On the other hand, it should also be noted that the bismoclite diffraction diminishes as the pH increases what indicates that bismoclite can be more efficiently recovered from the ESP converter dust at pH values between 2.0-3.5.

**Table 6. Crystalline phases identified from the X-ray diffraction patterns.**

| **pH** | **Crystalline phases (calcinated samples, no washing treatment)** | **Crystalline phases (calcinated samples, washed with Milli-Q water)** |
|---|---|---|
| 2.5 | • Bismoclite, syn - BiOCI | • Bismoclite, syn - BiOCI |
| | • Halite, syn - NaCl | • Halite, syn - NaCl |
| | • Rooseveltite, syn - BiAsO₄ | |
| | • Dansite, syn - Na₂₁Mg (SO₄)₁₀Cl₃ | |
| 3.5 | • Bismoclite, syn - BiOCI | • - |
| | • Halite, syn - NaCl | |
| | • Dansite, syn - Na₂₁Mg (SO₄)₁₀Cl₃ | |
| 4.5 | • Bismoclite, syn - BiOCI | • - |
| | • Halite, syn - NaCl | |
| | • Dansite, syn - Na₂₁Mg (SO₄)₁₀Cl₃ | |
| 5.5 | • Bismoclite, syn - BiOCI | • |
| | • Halite, syn - NaCl | |
| | • Dansite, syn - Na₂₁Mg (SO₄)₁₀Cl₃ | |

In view of these results, the inventors can conclude that Bi can be recovered efficiently from the ESP converter dust as BiOCI (s) according to the recovery protocol at a pH of 2.5, when the samples are subjected to final stage of calcination for two hours at 347°C. The washing stage with Milli-Q water displaces the impurities, thus improving the quality of the Bi end-product.

### Example 3: Optimised bismoclite recovery by pre-treatment with a first acid leach with sulphuric acid

A sample of ESP converter dust from a pyrometallurgical facility designated for the primary production of Cu is acid digested was acid-digested in duplicate using a specific two-step digestion method devised by Querol et al. (Querol X, Fernandez-Turiel JL, López-Soler A. Trace elements in coal and their behaviour during combustion in a large power station. Fuel 1995;74(3):331-43) to retain volatile elements. Several reagent blanks and the standard reference materials NIST SRM 1633b (fly ash) and SARM 19 (South African coal, Council for Mineral Technology) were also digested to determine the accuracy of the analytical and digestion methods. Analytical precision of 2NIST SRM 1633b samples expressed as relative error percentage (ER) were estimated at 2 to 4% for the key elements. Concentrations of major elements in the acid digests were determined using Inductively-Coupled Plasma Atomic-Emission Spectrometry (ICP-AES, Iris Advantage Radial ER/S device from Thermo Jarrell-Ash). Powder X-ray diffraction (XRD) data for mineralogical analyses of the ESP converter dust were collected by a Bruker D8 A25 Advance θ-θ diffractometer, with CuKα1 radiation, Bragg-Brentano geometry and a position-sensitive LynxEyeXE detector. The diffractograms were obtained at 40kV and 40mA, scanning from 4° to 60° of 2θ with a step size of 0.019° and a counting time of 0.1s/step maintaining the sample in rotation (15/min). The crystalline phase identification was conducted using the EVA software package (Bruker).

The characterisation of the ESP converter dust samples revealed that the crystalline minerals in the ESP converter dust samples consist mainly of gunnite (ZnSO₄.2H₂O, 72%) together with varying proportions of anglesite (PbSO₄, 21%) and cuprite (Cu₂O, 4.4%). Traces of arsenolite (As₂O₃, 1.8%) are also present in the ESP converter dust samples. Although no phases of Bi have been identified by XRD, this does not rule out its occurrence in the ESP converter dust since amorphous phases or even elements with concentrations <1% cannot be identified by XRD. Bismuth is most likely to occur as bismuth oxide (Bi₂O₃) in the ESP converter dust.

Due to the occurrence of metal impurities in the recovered end-product, a metal dissolution study was performed where we evaluated the solubility of the main species of the major components of the ESP converter dust: Cu (Cu₂O), As (As₂O₃), Zn (ZnSO₄), Pb (PbSO₄) in different media.

Based on those results and since most of the Cu in the ESP converter dust occurs as oxide phases (Cu₂O), a dilute H₂SO₄ leaching was chosen to leach out Cu values to a liquid phase. In this particular case, the objective was to selectively dissolve the Cu to a maximum extent possible while avoiding Bi dissolution at this stage. Therefore, we performed leaching processes with 5%, 10%, 15% and 50% H₂SO₄ where the leaching with 50% H₂SO₄ is used as a control to evaluate 1) the inhibition of the solubility specifically of Zn, 2) the maximum solubility of As and Cu, and 3) formation and enrichment of the CuHAsO₃ complex. The leaching processes were performed first at lab temperature.

To this end, a sample of the dust is leached with sulphuric acid (5%, 10% and 15%, respectively) to lead the solubilisation of the above-mentioned elements at lab temperature for 120 minutes (reaction time). The ESP converter dust is pulped, and the pulp density is 18-19%. The pulp is then subjected to a solid/liquid separation by any conventional mechanism e.g., centrifugation. Both an aliquot of the liquid and a proportion of the solid acid leach is preserved for further ICP-AES analyses. The composition of the ESP converter dust before and after the acid leach stage and later washed with water is shown in Table 7.

**Table 7. Chemical composition of the ESP converter dust sample (wt%).**

| **wt%** | **Cu** | **Zn** | **As** | **Cd** | **Pb** | **Bi** |
|---|---|---|---|---|---|---|
| Before H₂SO₄ leaching | 20 | 11 | 3.8 | 0.8 | 6.2 | 1.4 |
| After 5% H₂SO₄ leaching | 0.82 | 1.65 | 4.16 | 0.50 | 35.7 | 11.10 |
| After 10% H₂SO₄ leaching | 1.79 | 1.81 | 3.12 | 0.35 | 12.9 | 9.17 |
| After 15% H₂SO₄ leaching | 4.15 | 1.59 | 2.76 | 0.43 | 20.10 | 7.64 |
| After 50% H₂SO₄ leaching | 4.20 | 8.20 | 0.80 | 0.60 | 13.00 | 2.00 |

The acid leach allows the solubilisation most of the acid-soluble Cu, e.g., copper oxide (Cu₂O) present in this ESP converter dust sample into the acid leach as copper sulphate (Cu₂SO₄^{.}5H₂O). The acid leach also allows the solubilisation of most of the Zn, As, and Pb, which occur in a sulphate form, into the liquid acid leach where they do remain as metal sulphate-complexes. The content of Cu in the ESP converter dust decreases by a factor (Cu before leaching/Cu after leaching) from 4.8 to 25 as Zn (6.1 to 6.9), As (1.2 to 2.9), and Cd (2.0). As expected, Bi and Pb remain in the solid acid leach as Bi₂O₃/BiSO₄ and PbSO₄, respectively.

### Example 3.1: Pre-treatment: first acid leach with 5% sulphuric acid; main treatment: acid leach with 16% hydrochloric acid.

Based on the preliminary results of ESP converter dust pre-treatment, a sample of the dust is leached with 5% sulphuric acid to lead the solubilisation of the above-mentioned elements at 70°C for 120 minutes (reaction time). The ESP converter dust is pulped, and the pulp density is 18-19%. The pulp is then subjected to a solid/liquid separation by any conventional mechanism e.g., centrifugation. Both an aliquot of the liquid and a proportion of the solid acid leach is preserved for further ICP-AES analyses. The solid leach at 70°C is then washed with milli-Q water and subjected to a solid/liquid separation. The composition of the ESP converter dust before and after the acid leach stage and later washed with water (5% H₂SO₄ at 70°C) is shown in Table 8.

**Table 8. Chemical composition of the ESP converter dust sample after pre-treatment, concentration in the acid liquid leachate, and later washed with water.**

| **wt%** | **Cu** | **Zn** | **As** | **Cd** | **Pb** | **Bi** |
|---|---|---|---|---|---|---|
| Before H₂SO₄ leaching | 20 | 11 | 3.8 | 0.8 | 6.2 | 1.4 |
| After H₂SO₄ (5%) leaching at 70°C | 1.11 | 1.73 | 3.87 | 0.44 | 22.7 | 10.4 |
| Liquid leached concentration (g/L) | 11.9 | 30.9 | 8.26 | 3.37 | <dl | <dl |
| After washing with milli-Q water | 6.17 | 0.75 | 3.70 | 0.33 | 20.9 | 10.5 |

| | | | | | | |
|---|---|---|---|---|---|---|
| dl = detection limit. | | | | | | |

The solid fraction of the acid leach pulp is transferred to the next acid leach stage (main acid leach stage) for admixture with hydrochloric acid (HCI) to favour the dissolution of Bi in the acid leached phase. The ESP converter dust sample (after the H₂SO₄ leach) is leached with hydrochloric acid (16%) at lab temperature for 120 minutes (reaction time). The ESP converter dust is pulped, and the pulp density is 18%. The solid fraction of the pulp is then subjected to a solid/liquid separation by any conventional mechanism e.g., centrifugation. Both an aliquot of the liquid and a proportion of the solid acid leach is preserved for further ICP-AES analyses. Table 9 shows the chemical composition of the leach solution and efficiency of the HCI acid leach stage.

**Table 9. Chemical composition of the leach solution and efficiency of the acid leach stage.**

| | **Cu** | **Zn** | **As** | **Cd** | **Pb** | **Bi** |
|---|---|---|---|---|---|---|
| Concentration (g/L) | 0.397 | 0.40 | 2.14 | 0.187 | 2.97 | 6.04 |
| Leaching efficiency (%) | - | 70 | 79 | 96 | - | 97 |

The acid pulp is then forwarded to a solid/liquid separation by any conventional mechanism e.g., centrifugation. The liquid fraction is forwarded to the Bi precipitation stage by controlled neutralisation to produce/recover Bi as an oxysalt: bismuth oxychloride (BiOCI (s)). To this end, the Bi-rich liquid leach is neutralised with a NaOH (160 g/L) solution under extremely controlled conditions where the variation of the pH of the leach is the determining factor. Bi precipitation as BiOCI (s) was performed at a pH value of 2.7. The preferred pH for Bi precipitation as BiOCI (s) is in the range of 1.0 to 2.7, preferably between 1.0 to 2.0. Due to the use of sodium hydroxide as neutralising agent, some sodium chloride interstitial impurities may or may not precipitate along with BiOCI (s). In the process of this invention, the Bi end-product (BiOCI (s)) is then subjected to milli-Q water washing to remove the rest of water-soluble impurities and forwarded to a solid/liquid separation by any conventional mechanism e.g., centrifugation or filtration. The X-ray diffraction pattern confirms the presence of BiOCI (s) phase in the Bi-end product (Figure 3).

### Example 3.2: Pre-treatment: first acid leach with 5% sulphuric acid; main treatment: acid leach with a blend of 5% sulphuric acid and 16% hydrochloric acid.

A sample of the dust is leached with 5% sulphuric acid to lead the solubilisation of the above-mentioned elements at 70°C, respectively, for 120 minutes (reaction time). The ESP converter dust is pulped, and the pulp density is 18-19%. The pulp is then subjected to a solid/liquid separation by any conventional mechanism e.g., centrifugation. Both an aliquot of the liquid and a proportion of the solid acid leach is preserved for further ICP-AES analyses. The solid leach at 70°C is then washed with milli-Q water and subjected to a solid/liquid separation. The composition of the ESP converter dust before and after the acid leach stage (5% H₂SO₄ at 70°C), concentration in the acid liquid leachate, and later washed with water is shown in Table 10.

**Table 10. Chemical composition of the ESP converter dust sample after pre-treatment, concentration in the acid liquid leachate, and later washed with water.**

| **wt%** | **Cu** | **Zn** | **As** | **Cd** | **Pb** | **Bi** |
|---|---|---|---|---|---|---|
| Before H₂SO₄ leaching (wt%) | 20 | 11 | 3.8 | 0.8 | 6.2 | 1.4 |
| After H₂SO₄ (5%) leaching at 70°C (wt%) | 1.11 | 1.73 | 3.87 | 0.444 | 22.7 | 10.4 |
| Leached concentration (g/L) | 14.9 | 38.2 | 10.2 | 4.30 | <dl | <dl |
| After washing with milli-Q water (wt%) | 6.17 | 0.75 | 3.70 | 0.329 | 20.9 | 10.5 |

| | | | | | | |
|---|---|---|---|---|---|---|
| dl = detection limit. | | | | | | |

The solid fraction of the acid leach pulp is transferred to the next acid leach stage (main acid leach stage) for admixture with a blend of sulphuric acid (5%) and hydrochloric acid (16%) to favour the dissolution of Bi in the acid leached phase. The ESP converter dust sample (after the H₂SO₄ leach) is leached with a blend of sulphuric acid (5%) hydrochloric acid (16%) at lab temperature for 120 minutes (reaction time). The ESP converter dust is pulped, and the pulp density is 18%. The solid fraction of the pulp is then subjected to a solid/liquid separation by any conventional mechanism e.g., centrifugation. Both an aliquot of the liquid and a proportion of the solid acid leach is preserved for further ICP-AES analyses. Table 11 shows the chemical composition of the leach solution and efficiency of the acid leach stage.

**Table 11. The chemical composition of the leach solution and efficiency of the acid blend leach stage.**

| | **Cu** | **Zn** | **As** | **Cd** | **Pb** | **Bi** |
|---|---|---|---|---|---|---|
| Concentration (g/L) | 9.39 | 0.437 | 2.65 | 0.244 | 1.12 | 8.12 |
| Leaching efficiency (%) | - | 70 | 63 | 96 | 33 | 98 |

The acid pulp is then forwarded to a solid/liquid separation by any conventional mechanism e.g., centrifugation. The liquid fraction is forwarded to the Bi precipitation stage by controlled neutralisation to produce/recover Bi as an oxysalt: bismuth oxychloride (BiOCI (s)). To this end, the Bi-rich liquid leach is neutralised with a NaOH (160 g/L) solution under extremely controlled conditions where the variation of the pH of the leach is the determining factor. Bi precipitation as BiOCI (s) was performed at a pH value of 2.0. The preferred pH for Bi precipitation as BiOCI (s) is in the range of 1.0 to 2.7, preferably between 1.0 to 2.0. Due to the use of sodium hydroxide as neutralising agent, some sodium chloride interstitial impurities may or may not precipitate along with BiOCI (s). In the process of this invention, the Bi end-product (BiOCI (s)) is then subjected to milli-Q water washing to remove the rest of water-soluble impurities and forwarded to a solid/liquid separation by any conventional mechanism e.g., centrifugation or filtration. The X-ray diffraction pattern confirms the presence of BiOCI (s) phase in the Bi-end product (Figure 4).

### Example 3.3: Pre-treatment: first acid leach with 50% sulphuric acid; main treatment: acid leach with 16% hydrochloric acid.

As explained above, the leaching processes with 50% H₂SO₄ is used as a control to evaluate 1) the inhibition of the solubility specifically of Zn, 2) the maximum solubility of As and Cu, and 3) formation and enrichment of the CuHAsO₃ complex. The leaching processes with 50% H₂SO₄ was always performed at lab temperature.

A sample of the dust is leached with 50% sulphuric acid to lead the solubilisation of the above-mentioned elements at lab temperature for 120 minutes (reaction time). The ESP converter dust is pulped, and the pulp density is 19%. The pulp is then subjected to a solid/liquid separation by any conventional mechanism e.g., centrifugation. Both an aliquot of the liquid and a proportion of the solid acid leach is preserved for further ICP-AES analyses. The composition of the ESP converter dust before and after the acid leach stage (50% H₂SO₄), concentration in the acid liquid leachate, and leaching efficiency is shown in Table 12.

**Table 12. Chemical composition of the ESP converter dust sample after pre-treatment, concentration in the acid liquid leachate, and leaching efficiency.**

| **wt%** | **Cu** | **Zn** | **As** | **Cd** | **Pb** | **Bi** |
|---|---|---|---|---|---|---|
| Before H₂SO₄ leaching | 20 | 11 | 3.8 | 0.8 | 6.2 | 1.4 |
| After H₂SO₄ (50%) leaching | 4.2 | 7.7 | 0.7 | 0.6 | 12 | 2.1 |
| Concentration (g/L) | 5.1 | 1.3 | 11 | 1.4 | <dl | 1.9 |
| Leaching efficiency (%) | 79 | 30 | 82 | 25 | - | - |

| | | | | | | |
|---|---|---|---|---|---|---|
| dl = detection limit. | | | | | | |

The acid leach (50% H₂SO₄) allows the partial solubilisation of the acid-soluble Cu, e.g., copper oxide (Cu₂O) present in this ESP converter dust sample into the acid leach as copper hydrogen arsenite (CuHAsO₃) and it inhibits the solubilisation of Zn. The resulting solution is a highly acidic As and Cu-rich liquid leachate. Arsenic is a toxic impurity that needs to be removed from the acid liquid leachate and discarded of in a safely manner. This As and Cu-rich liquid can be contacted with iron sulphate (Fe₂(SO₄)₃) in order to precipitate scorodite (FeAsO_{4·}2H₂O). Scorodite is an environmentally friendly species of arsenic that can be discarded without posing a toxic threat to the environment. Once this is achieved, efforts are focused on the recovery of copper from the As-free liquid fraction by electrolytic deposition. On the other hand, Pb and Bi remain in the solid acid leach as PbSO₄and BiSO₄/ Bi₂O₃, respectively.

The pulp is then subjected to a solid/liquid separation by any conventional mechanism e.g., centrifugation. Both an aliquot of the liquid and a proportion of the solid acid leach is preserved for further ICP-AES analyses. The solid leach is then washed with milli-Q for an hour. The pulp is then subjected to a solid/liquid separation by any conventional mechanism e.g., centrifugation. Both an aliquot of the liquid and a proportion of the solid acid leach is preserved for further ICP-AES analyses. Table 13 shows the chemical composition of the leach solution and efficiency of the washing stage with the milli-Q water.

**Table 13. The chemical composition of the leach solution and efficiency of the washing stage**

| | **Cu** | **Zn** | **As** | **Cd** | **Pb** | **Bi** |
|---|---|---|---|---|---|---|
| Concentration (g/L) | 14 | 40 | 4.6 | 3.5 | <dl | 2.5 |
| Leaching efficiency (%) | 90 | 88 | - | 76 | - | - |

The resulting solution after the milli-Q water wash is also an acid liquid leach (pH = 0.8) where most, if not all, of Zn is solubilised as ZnSO₄. The highly enrichment of Zn in this rejected stream would allow us to pursue the recovery of Zn once As is eliminated.

The solid fraction of the acid leach pulp is transferred to the next acid leach stage (main acid leach stage) for admixture with hydrochloric acid (16%) to favour the dissolution of Bi in the acid leached phase. The ESP converter dust sample (after the milli-Q water wash) is leached with HCI (16%) to lead the solubilisation of Bi at lab temperature for 120 minutes (reaction time). The ESP converter dust is pulped, and the pulp density is 14%. The solid fraction of the pulp is then subjected to a solid/liquid separation by any conventional mechanism e.g., centrifugation. Both an aliquot of the liquid and a proportion of the solid acid leach is preserved for further ICP-AES analyses. The acid pulp is then forwarded to a solid/liquid separation by any conventional mechanism e.g., centrifugation. Both an aliquot of the liquid and a proportion of the solid acid leach is preserved for further ICP-AES analyses. Table 14 shows the chemical composition of the leach solution and efficiency of the acid leach stage.

**Table 14. The chemical composition of the leach solution and efficiency of the HCI acid leach stage.**

| | **Cu** | **Zn** | **As** | **Cd** | **Pb** | **Bi** |
|---|---|---|---|---|---|---|
| Concentration (g/L) | 3.3 | 2.1 | 1.2 | 0.3 | 2.7 | 4.6 |
| Leaching efficiency (%) | - | 37 | 67 | 69 | - | 96 |

The liquid fraction is forwarded to the Bi precipitation stage by controlled neutralisation to produce/recover Bi as an oxysalt: bismuth oxychloride (BiOCI (s)). To this end, the Bi-rich liquid leach is neutralised with a NaOH (160 g/L) solution under extremely controlled conditions where the variation of the pH of the leach is the determining factor. Bi precipitation as BiOCI (s) was performed at a pH value of 1.0. The preferred pH for Bi precipitation as BiOCI (s) is in the range of 1.0 to 2.7, preferably between 1.0 to 2.0. Due to the use of sodium hydroxide as neutralising agent, some sodium chloride interstitial impurities may or may not precipitate along with BiOCI (s). In the process of this invention, the Bi end-product (BiOCI (s)) is then subjected to milli-Q water washing to remove the rest of water-soluble impurities and forwarded to a solid/liquid separation by any conventional mechanism e.g., centrifugation or filtration. The X-ray diffraction pattern confirms the presence of BiOCI (s) phase in the Bi-end product (Figure 5).

### Example 3.4: Pre-treatment: first acid leach with 50% sulphuric acid; main treatment: acid leach with a blend of 5% sulphuric acid and 16% hydrochloric acid.

A sample of the dust is leached with 50% sulphuric acid to lead the solubilisation of the above-mentioned elements at lab temperature for 120 minutes (reaction time). The ESP converter dust is pulped, and the pulp density is 19%. The pulp is then subjected to a solid/liquid separation by any conventional mechanism e.g., centrifugation. Both an aliquot of the liquid and a proportion of the solid acid leach is preserved for further ICP-AES analyses. The composition of the ESP converter dust before and after the acid leach stage (50% H₂SO₄), concentration in the acid liquid leachate, and leaching efficiency is shown in Table 15.

**Table 15. Chemical composition of the ESP converter dust sample after pre-treatment, concentration in the acid liquid leachate, and leaching efficiency.**

| | **Cu** | **Zn** | **As** | **Cd** | **Pb** | **Bi** |
|---|---|---|---|---|---|---|
| Before H₂SO₄ leaching | 20 | 11 | 3.8 | 0.8 | 6.2 | 1.4 |
| After H₂SO₄ (50%) leaching | 2.43 | 10.3 | 0.76 | 0.89 | 1.42 | 1.73 |
| Concentration (g/L) | 5.40 | 2.28 | 9.86 | 1.40 | <dl | <dl |
| Leaching efficiency (%) | 88 | 7.93 | 80 | - | - | - |

| | | | | | | |
|---|---|---|---|---|---|---|
| dl = detection limit. | | | | | | |

The acid leach (50% H₂SO₄) allows the partial solubilisation of the acid-soluble Cu, e.g., copper oxide (Cu₂O) present in this ESP converter dust sample into the acid leach as copper hydrogen arsenite (CuHAsO₃) and it inhibits the solubilisation of Zn. The resulting solution is a highly acidic As and Cu-rich liquid leachate. Arsenic is a toxic impurity that needs to be removed from the acid liquid leachate and discarded of in a safely manner. This As and Cu-rich liquid can be contacted with iron sulphate (Fe₂(SO₄)₃) in order to precipitate scorodite (FeAsO_{4·}2H₂O). Scorodite is an environmentally friendly species of arsenic that can be discarded without posing a toxic threat to the environment. Once this is achieved, efforts are focused on the recovery of copper from the As-free liquid fraction by electrolytic deposition. On the other hand, Pb and Bi remain in the solid acid leach as PbSO₄ and BiSO₄/ Bi₂O₃, respectively.

The pulp is then subjected to a solid/liquid separation by any conventional mechanism e.g., centrifugation. Both an aliquot of the liquid and a proportion of the solid acid leach is preserved for further ICP-AES analyses. The solid leach is then washed with milli-Q for an hour. The pulp is then subjected to a solid/liquid separation by any conventional mechanism e.g., centrifugation. Both an aliquot of the liquid and a proportion of the solid acid leach is preserved for further ICP-AES analyses. Table 16 shows the chemical composition of the leach solution and efficiency of the washing stage after the milli-Q water.

**Table 16. The chemical composition of the leach solution and efficiency of the washing stage.**

| | **Cu** | **Zn** | **As** | **Cd** | **Pb** | **Bi** |
|---|---|---|---|---|---|---|
| Concentration (g/L) | 7.05 | 26.2 | 1.71 | 2.21 | <dl | 1.12 |
| Leaching efficiency (%) | - | 84 | - | 66 | - | - |

| | | | | | | |
|---|---|---|---|---|---|---|
| dl = detection limit. | | | | | | |

The resulting solution after the milli-Q water wash is also an acid liquid leach (pH = 0.8) where most, if not all, of Zn is solubilised as ZnSO₄. The highly enrichment of Zn in this rejected stream would allow us to pursue the recovery of Zn once As is eliminated.

The solid fraction of the acid leach pulp is transferred to the next acid leach stage (main acid leach stage) for admixture with a blend of sulphuric acid (5%) and hydrochloric acid (16%) to favour the dissolution of Bi in the acid leached phase. The ESP converter dust sample (after the milli-Q water wash) is leached with mixture of H₂SO₄ (5%) and HCI (16%) to lead the solubilisation of Bi at lab temperature for 120 minutes (reaction time). The ESP converter dust is pulped, and the pulp density is 14%. The solid fraction of the pulp is then subjected to a solid/liquid separation by any conventional mechanism e.g., centrifugation. Both an aliquot of the liquid and a proportion of the solid acid leach is preserved for further ICP-AES analyses. The acid pulp is then forwarded to a solid/liquid separation by any conventional mechanism e.g., centrifugation. Both an aliquot of the liquid and a proportion of the solid acid leach is preserved for further ICP-AES analyses. Table 17 shows the chemical composition of the leach solution and efficiency of the acid leach stage.

**Table 17. The chemical composition of the leach solution and efficiency of the acid leach stage.**

| | **Cu** | **Zn** | **As** | **Cd** | **Pb** | **Bi** |
|---|---|---|---|---|---|---|
| Concentration (g/L) | 1.15 | 1.14 | 1.11 | 0.021 | 0.683 | 3.72 |
| Leaching efficiency (%) | - | 80 | 60 | 95 | - | 97 |

The liquid fraction is forwarded to the Bi precipitation stage by controlled neutralisation to produce/ recover Bi as an oxysalt: bismuth oxychloride (BiOCI (s)). To this end, the Bi-rich liquid leach is neutralised with a NaOH (160 g/L) solution under extremely controlled conditions where the variation of the pH of the leach is the determining factor. Bi precipitation as BiOCI (s) was performed at a pH value of 2.0. The preferred pH for Bi precipitation as BiOCI (s) is in the range of 1.0 to 2.7, preferably between 1.0 to 2.0. Due to the use of sodium hydroxide as neutralising agent, some sodium chloride interstitial impurities may or may not precipitate along with BiOCI (s). In the process of this invention, the Bi end-product (BiOCI (s)) is then subjected to milli-Q water washing to remove the rest of water-soluble impurities and forwarded to a solid/liquid separation by any conventional mechanism e.g., centrifugation or filtration. The X-ray diffraction pattern confirms the presence of BiOCI (s) phase in the Bi-end product (Figure 6).

### Example 3.5: Pre-treatment: first acid leach with 50% sulphuric acid; main treatment: acid leach with a blend of 50% sulphuric acid and 16% hydrochloric acid.

A sample of the dust is leached with 50% sulphuric acid to lead the solubilisation of the above-mentioned elements at lab temperature for 120 minutes (reaction time). The ESP converter dust is pulped, and the pulp density is 19%. The pulp is then subjected to a solid/liquid separation by any conventional mechanism e.g., centrifugation. Both an aliquot of the liquid and a proportion of the solid acid leach is preserved for further ICP-AES analyses. The composition of the ESP converter dust before and after the acid leach stage (50% H₂SO₄), concentration in the acid liquid leachate, and leaching efficiency is shown in Table 18.

**Table 18. Chemical composition of the ESP converter dust sample after pre-treatment, concentration in the acid liquid leachate, and leaching efficiency.**

| | **Cu** | **Zn** | **As** | **Cd** | **Pb** | **Bi** |
|---|---|---|---|---|---|---|
| Before H₂SO₄ leaching (wt%) | 20 | 11 | 3.8 | 0.8 | 6.2 | 1.4 |
| After H₂SO₄ (50%) leaching (wt%) | 5.70 | 16.7 | 1.16 | 1.20 | 16.5 | 1.77 |
| Concentration (g/L) | 5.58 | 2.4 | 9.96 | 1.46 | <dl | 1.94 |
| Leaching efficiency (%) | 72.5 | - | 69.4 | - | - | - |

The acid leach (50% H₂SO₄) allows the partial solubilisation of the acid-soluble Cu, e.g., copper oxide (Cu₂O) present in this ESP converter dust sample into the acid leach as copper hydrogen arsenite (CuHAsO₃) and it inhibits the solubilisation of Zn. The resulting solution is a highly acidic As and Cu-rich liquid leachate. Arsenic is a toxic impurity that needs to be removed from the acid liquid leachate and discarded of in a safely manner. This As and Cu-rich liquid can be contacted with iron sulphate (Fe₂(SO₄)₃) in order to precipitate scorodite (FeAsO_{4·}2H₂O). Scorodite is an environmentally friendly species of arsenic that can be discarded without posing a toxic threat to the environment. Once this is achieved, efforts are focused on the recovery of copper from the As-free liquid fraction by electrolytic deposition. On the other hand, Pb and Bi remain in the solid acid leach as PbSO₄ and BiSO₄/ Bi₂O₃, respectively.

The pulp is then subjected to a solid/liquid separation by any conventional mechanism e.g., centrifugation. Both an aliquot of the liquid and a proportion of the solid acid leach is preserved for further ICP-AES analyses. The solid leach is then washed with milli-Q for an hour. The pulp is then subjected to a solid/liquid separation by any conventional mechanism e.g., centrifugation. Both an aliquot of the liquid and a proportion of the solid acid leach is preserved for further ICP-AES analyses. Table 19 shows the chemical composition of the leach solution and efficiency of the acid leach stage after the milli-Q water wash.

**Table 19. The chemical composition of the leach solution and efficiency of the washing stage.**

| | **Cu** | **Zn** | **As** | **Cd** | **Pb** | **Bi** |
|---|---|---|---|---|---|---|
| Concentration (g/L) | 14.8 | 41.7 | 4.74 | 3.36 | <dl | 1.75 |
| Leaching efficiency (%) | 90 | 88 | - | 76 | - | - |

The resulting solution after the milli-Q water wash is also an acid liquid leach (pH = 0.8) where most, if not all, of Zn is solubilised as ZnSO₄. The highly enrichment of Zn in this rejected stream would allow us to pursue the recovery of Zn once As is eliminated.

The solid fraction of the acid leach pulp is transferred to the next acid leach stage (main acid leach stage) for admixture with a blend of sulphuric acid (50%) and hydrochloric acid (16%) to favour the dissolution of Bi in the acid leached phase. The ESP converter dust sample (after the milli-Q water wash) is leached with mixture of H₂SO₄ (50%) and HCI (16%) to lead the solubilisation of Bi at lab temperature for 120 minutes (reaction time). The ESP converter dust is pulped, and the pulp density is 14%. The solid fraction of the pulp is then subjected to a solid/liquid separation by any conventional mechanism e.g., centrifugation. Both an aliquot of the liquid and a proportion of the solid acid leach is preserved for further ICP-AES analyses. The acid pulp is then forwarded to a solid/liquid separation by any conventional mechanism e.g., centrifugation. Both an aliquot of the liquid and a proportion of the solid acid leach is preserved for further ICP-AES analyses. Table 20 shows the chemical composition of the leach solution and efficiency of the acid leach stage.

**Table 20. The chemical composition of the leach solution and efficiency of the acid leach stage.**

| | **Cu** | **Zn** | **As** | **Cd** | **Pb** | **Bi** |
|---|---|---|---|---|---|---|
| Concentration (g/L) | 3.59 | 2.49 | 1.59 | 0.397 | 0.423 | 6.05 |
| Leaching efficiency (%) | - | 89 | 75 | 100 | - | 95 |

The liquid fraction is forwarded to the Bi precipitation stage by controlled neutralisation to produce/recover Bi as an oxysalt: bismuth oxychloride (BiOCI (s)). To this end, the Bi-rich liquid leach is neutralised with a NaOH (160 g/L) solution under extremely controlled conditions where the variation of the pH of the leach is the determining factor. Bi precipitation as BiOCI (s) was performed at a pH value of 2.7. The preferred pH for Bi precipitation as BiOCI (s) is in the range of 1.0 to 2.7, preferably between 1.0 to 2.0. Due to the use of sodium hydroxide as neutralising agent, some sodium chloride interstitial impurities may or may not precipitate along with BiOCI (s). In the process of this invention, the Bi end-product (BiOCI (s)) is then subjected to milli-Q water washing to remove the rest of water-soluble impurities and forwarded to a solid/liquid separation by any conventional mechanism e.g., centrifugation or filtration. The X-ray diffraction pattern confirms the presence of BiOCI (s) phase in the Bi-end product (Figure 7).

## Claims

1. A method for recovering bismuth (Bi) from a solid impurity stream generated during the pyrometallurgical production of copper, wherein the method comprises the steps of:
a) Leaching the solid impurity stream in an acid medium at a pH under 0.5 to obtain a Bi-rich leachate;
b) Titrating the Bi-rich leachate at a pH between 1.0 and 3.5 by using a strong base to obtain a precipitate of bismoclite (BiOCI).

2. The method according to claim 1, wherein the acid medium is an inorganic acid, preferably wherein the acid medium is HCI or a combination of HCI and H₂SO₄.

3. The method according to claim 2, wherein the HCI is 10-16% HCI, preferably 16% HCI, or wherein the combination of HCI and H₂SO₄ is 10-16% HCI, preferably 16% HCI, and 5-15% H₂SO₄, preferably 5% H₂SO₄.

4. The method according to any one of claims 1 to 3, wherein the method comprises, prior to step (a), a step (a1) of leaching the solid impurity stream in a first acid medium at a pH between 1 and 4 to obtain a first Cu-rich leachate and a first Bi-rich solid, wherein the first Bi-rich solid is then leached in place of the solid impurity stream of step (a).

5. The method according to claim 4, wherein the first acid medium is H₂SO₄, preferably wherein the first acid medium is 5-15% H₂SO₄ or 50% H₂SO₄.

6. The method according to any one of claims 1 to 5, wherein the method comprises, prior to step (a) but after step (a1), a step (a2) of washing the solid impurity stream in step (a) or the first Bi-rich solid obtained in step (a1) in water, preferably MilliQ water.

7. The method according to any one of claims 1 to 6, wherein the method comprises, after step (b), a further step (c) of washing the precipitate of BiOCI obtained in step (b) in water, preferably MilliQ water.

8. The method according to any one of claims 1 to 7, wherein the method comprises, after step (b) or after step (c), a further step (d) of calcinating the precipitate of BiOCI at a temperature between 300-400°C.

9. A method for the recovery of valuable materials and for the safe disposal of toxic contaminants from a solid impurity stream generated during the pyrometallurgical production of copper, wherein the method comprises the steps of:
a) Leaching the solid impurity stream in a first acid medium at a pH between 1 and 4 to obtain a first Cu-rich leachate and a first Bi-rich solid, wherein the first acid medium is H₂SO₄;
b) Optionally, washing the first Bi-rich solid obtained in step (a) in water, preferably MilliQ water, to obtain a second Cu-rich leachate and a second Bi-rich solid;
c) Leaching the first Bi-rich solid obtained in step (a) or the second Bi-rich solid obtained in step (b) in a second acid medium at a pH under 0.5 to obtain a Bi-rich leachate and a Pb-rich solid, wherein the second acid medium is HCI or a combination of HCI and H₂SO₄;
d) Titrating the Bi-rich leachate at a pH between 1.0 and 3.5 by using a strong base to obtain a precipitate of bismoclite (BiOCI) and an As-rich liquid;
e) Optionally, washing the precipitate of bismoclite (BiOCI) obtained in step (d) in water, preferably MilliQ water;
f) Optionally, calcinating the precipitate of BiOCI obtained in step (e) or the washed precipitate of BiOCI obtained in step (f) at a temperature between 300-400°C;
g) Contacting the As-rich liquid with iron sulphate (Fe₂(SO₄)₃) to precipitate scorodite (FeAsO₄^{.}2H₂O).

10. The method according to claim any one of claims 1 to 9, wherein the strong base is NaOH.

11. The method according to any one of claims 1 to 10, wherein the solid impurity stream is dust from a Cu converter source.

12. The method according to any one of claims 1 to 10, wherein the solid impurity stream is dust collected in an electrostatic precipitator (ESP).

13. The method according to any one of claims 11 or 12, wherein the dust from a Cu converter source comprises, as elements present at a concentration ≥1%, Cu, Zn, S, Pb, As, and Bi, wherein:
- Cu is present at a concentration of 20-24%, preferably 21%;
- S is present at a concentration of 10-14%, preferably 12%;
- Zn is present at a concentration of 10-14%, preferably 12%;
- Pb is present at a concentration of 6.0-8.0%, preferably 6.9%;
- As is present at a concentration of 3.0-5.0%, preferably 3.8%;
- Bi is present at a concentration of 1.0-2.0%, preferably 1.5%.
